(19) Europäisches Patentamt

European Patent Office

Office européen des brevets

(11)  **EP 1 947 642 B1**

(12) # EUROPEAN PATENT SPECIFICATION

(45) Date of publication and mention
of the grant of the patent:
**13.06.2018  Bulletin 2018/24**

(51) Int Cl.:
***G10K 11/178*** *(2006.01)*

(21) Application number: **07000818.0**

(22) Date of filing: **16.01.2007**

(54) **ACTIVE NOISE CONTROL SYSTEM**

AKTIVES GERÄUSCHDÄMPFUNGSSYSTEM

SYSTÈME DE CONTRÔLE ACTIF DU BRUIT

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**23.07.2008  Bulletin 2008/30**

(73) Proprietor: **Apple Inc.
Cupertino, CA 95014 (US)**

(72) Inventor: **Christoph, Markus
94315 Straubing (DE)**

(74) Representative: **Barnfather, Karl Jon et al
Withers & Rogers LLP
4 More London Riverside
London SE1 2AU (GB)**

(56) References cited:
**EP-A- 1 003 154**

EP 1 947 642 B1

## Description

TECHNICAL FIELD

The invention refers to active noise control (ANC), including active motor sound tuning (MST), in particular for automobile and headphone applications.

BACKGROUND

Noise is generally the term used to designate sound that does not contribute to the informational content of a receiver, but rather is perceived to be interfering with the audio quality of a useful signal. The evolution process of noise can be typically divided into three areas. These are the generation of the noise, its propagation (emission) and its perception. It can be seen that an attempt to successfully reduce noise is initially aimed at the source of the noise itself - for example, by attenuation and subsequently by suppression of the propagation of the noise signal. Nonetheless, the emission of noise signals cannot be reduced to the desired degree in many cases. In such cases the concept of removing undesirable sound by superimposing a compensation signal is applied.

Known methods and systems for canceling or reducing emitted noise (ANC systems and methods) or undesirable interference signals - for example, through MST systems and methods, suppress unwanted noise by generating cancellation sound waves to superimpose on the unwanted signal, whose amplitude and frequency values are for the most part identical to those of the noise signal, but whose phase is shifted by 180 degrees in relation to the unwanted signal. In ideal situations, this method fully extinguishes the unwanted noise. This effect of targeted reduction in the sound level of a noise signal is often referred to as destructive interference.

The term 'noise' refers in this case both to external acoustic sound waves - such as ambient noise or the motion sounds perceived in the passenger area of an automobile - and to acoustic sound waves initiated by mechanical vibrations, for example, the passenger area or drive of an automobile. If the sounds are undesirable, they are also referred to as noise. Whenever music or speech is relayed via an electro-acoustic system in an area exposed to audio signals, such as the passenger space of an automobile, the auditory perception of the signals is generally impaired by the background noise. The background noise can be caused by effects of the wind, the engine, the tires, fan and other units in the car, and therefore varies with the speed, road conditions and operating states in the automobile.

So-called rear seat entertainment is becoming more and more popular in modern automobiles. This is offered by systems that provide high-quality audio signal reproduction and consequently demand greater consideration - or alternatively put - further reduction in the noise signals experienced. The option of focusing of audio signals toward individual persons is likewise demanded, normally through the medium of headphones. Known systems and methods therefore refer both to applications for the sonic field in the passenger area of an automobile and to transmission through headphones.

Particularly, it has to be considered the acoustics present in automobiles due to undesirable noise - for example, components emitting from the engine or exhaust system. A noise signal generated by an engine generally includes a large number of sinusoidal components with amplitude and frequency values that are directly related to the revolving speed of the engine. These frequency components comprise both even and odd harmonic frequencies of the fundamental frequency (in revolutions per second) as well as half-order multiples or subharmonics.

Thorough investigations have shown that a low, but constant noise level is not always evaluated positively. Instead, acceptable engine noises must satisfy strict requirements. Harmonic audio sequences are particularly favored. Since dissonance cannot be always excluded even for today's highly sophisticated mechanical engine designs, methods are employed to actively control engine noise in a positive manner. Methods of this kind are referred to as motor sound tuning (MST). To model the sonic behavior in these systems, for example, procedures are employed that use unwanted audio components for their cancellation at the source - for example, by means of a loudspeaker located in the intake duct of an engine for the acoustic cancellation signal. Methods are also known in which in a similar manner the sonic emission of the exhaust system of an automobile is modeled by the expunction of unwanted noise components.

Active noise control methods and systems for noise reduction or sonic modeling are becoming increasingly more popular in recent times, in that modern digital signal processing and adaptive filter procedures are utilized. In typical applications, an input sensor - for example, a microphone - is used to derive a signal representing the unwanted noise that is generated by a source. This signal is then fed into the input of an adaptive filter and reshaped by the filter characteristics into an output signal that is used to control a cancellation actuator - for example, an acoustic loudspeaker or electromechanical vibration generator. The loudspeaker, or vibration generator, generates cancellation waves or vibrations that are superimposed on the unwanted noise signals or vibrations deriving from the source. The observed remaining noise level resulting from the superimposition of the noise control sound waves on the unwanted noise is measured by an error sensor, which generates a corresponding error feedback signal. This feedback signal is the basis used for modification of the parameters and characteristics of the adaptive filter in order to adaptively minimize the overall level of the observed noise or remainder noise signals. Feedback signal is the term used in digital signal processing for this responsive signal.

A known algorithm that is commonly used in digital signal processing is an extension of the familiar Least Mean Squares (LMS) algorithm for minimization of the error feedback signal: the so-called Filtered-x LMS algorithm (FxLMS, cf. WIDROW, B., STEARNS, S. D. (1985): "Adaptive Signal Processing." Prentice-Hall Inc., Englewood Cliffs, NJ, USA. ISBN 0-13-004029-0). To implement this algorithm, a model of the acoustic transfer function is required between the active noise control actuator - in the case presented here, a loudspeaker - and the error sensor, in this case, a microphone. The transfer path between the active noise control actuator and the error sensor is also known as the secondary or error path, and the corresponding procedure for determining the transfer function as the system identification. In addition, an additional broadband auxiliary signal - for example, white noise, is transferred from the active noise control actuator to the error sensor using state-of-the-art methods to determine the relevant transfer function of the secondary path for the FxLMS algorithm. The filter coefficients of the transfer function of the secondary path are either defined when starting the ANC system and remain constant, or they are adaptively adjusted to the transfer conditions that change in time.

A disadvantage of this approach is that the specified broadband auxiliary signal can be audible to the passengers in an automobile, depending on the prevailing ambient conditions. The signal can be perceived to be intrusive. In particular, an additional auxiliary signal of this kind will not satisfy the high demands placed on the quality (= least possible noise) of the interior acoustics and audio signal transmission for rear seat entertainment in high-value automobiles.

It is a general need to provide a method and system which enable a test signal inaudible to human passengers (and therefore unobtrusive) in an automobile that is used to determine the transfer function of the secondary path required for the FxLMS algorithm.

Patent application EP 1003154 A relates to a system for identifying a model of an acoustic system in the presence of an external noise signal is disclosed. The system includes an acoustic actuator for generating controlled sound within the acoustic system, a sensor that receives the controlled sound and the external noise signal and produces a sensed signal, and a control system that generates a control signal in response to an error signal.

SUMMARY

In order to mitigate at least some of the issues above, the present invention provides a system and method as defined in the appended claims.

It is provided a system for active control of an unwanted noise signal at a listening site radiated by a noise source wherein the unwanted noise is transmitted to the listening site via a primary path having a primary path transfer function; said system comprising: a loudspeaker for radiating a cancellation signal to reduce or cancel the unwanted noise signal; said cancellation signal is transmitted from the loudspeaker to the listening site via a secondary path; an error microphone (E) at the listening site for determining through an error signal the level of achieved reduction; a first adaptive filter for generating the canceling signal by filtering a signal representative of the unwanted noise signal with a transfer function adapted to the quotient of the primary- and the secondary path $(W(z)=P(z)/S(z))$ transfer function using the signal representative of the unwanted noise signal and the error signal from the error microphone; and a reference generator for generating a reference signal which is supplied to the loudspeaker together with the canceling signal from the first adaptive filter; said reference signal has such an amplitude and/or frequency that it is masked for a human listener at the listening site by the unwanted noise signal and/or a wanted signal present at the listening site.

A method for active control of an unwanted noise signal at a listening site radiated by a noise source wherein the unwanted noise is transmitted to the listening site via a primary path having a primary path transfer function comprises the steps of: radiating a cancellation signal to reduce or cancel the unwanted noise signal; said cancellation signal is transmitted from a loudspeaker to the listening site via a secondary path; determining through an error signal the level of achieved reduction at the listening site; first adaptive filtering for generating the canceling signal by filtering a signal representative of the unwanted noise signal with a transfer function adapted to the quotient of the primary- and the secondary path $(W(z)=P(z)/S(z))$ transfer function using the signal representative of the unwanted noise signal and the error signal; and generating a reference signal which is supplied to the loudspeaker together with the canceling signal from the first adaptive filtering step; said reference signal has an amplitude and/or frequency such that it is masked for a human listener at the listening site by the unwanted noise signal and/or a wanted signal present at the listening site.

BRIEF DESCRIPTION OF THE DRAWINGS

The invention can be better understood with reference to the following drawings and description. The components in the figures are not necessarily to scale, instead emphasis being placed upon illustrating the principles of the invention. Moreover, in the figures, like reference numerals designate corresponding parts. In the drawings:

Figure 1     is a block diagram of a system according to the present invention;

Figure 2      is a diagram illustrating the loudness as a function of the level of a sinusoidal tone and of a broadband noise signal;

Figure 3      is a diagram illustrating the masking of a tone by white noise;

Figure 4      is a diagram illustrating the masking effect in the frequency domain;

Figure 5      is a diagram illustrating the masked thresholds for critical frequency narrowband noise in the center frequencies of 250 Hz, 1 kHz and 4 kHz;

Figure 6      is a diagram illustrating the masking effect by sinusoidal tones;

Figure 7      is a diagram illustrating simultaneous, pre- and post-masking;

Figure 8      is a diagram illustrating the relationship of the loudness perception and the duration of a test tone pulse;

Figure 9      is a diagram illustrating the relationship of the masked threshold and the repetition rate of a test tone pulse.

Figure 10    is a diagram illustrating the post-masking effect in general;

Figure 11    is a diagram illustrating the post-masking effect in relation to the duration of the masker;

Figure 12    is a diagram illustrating the simultaneous masking by a complex tone;

Figure 13    is a block diagram showing an exemplary system for psychoacoustic system identification;

Figure 14    is a block diagram showing another exemplary system for psychoacoustic system identification;

Figure 15    is a block diagram showing just another exemplary system for psychoacoustic system identification;

Figure 16    is a flow diagram of process implementing the masking model evaluating a linear function; and

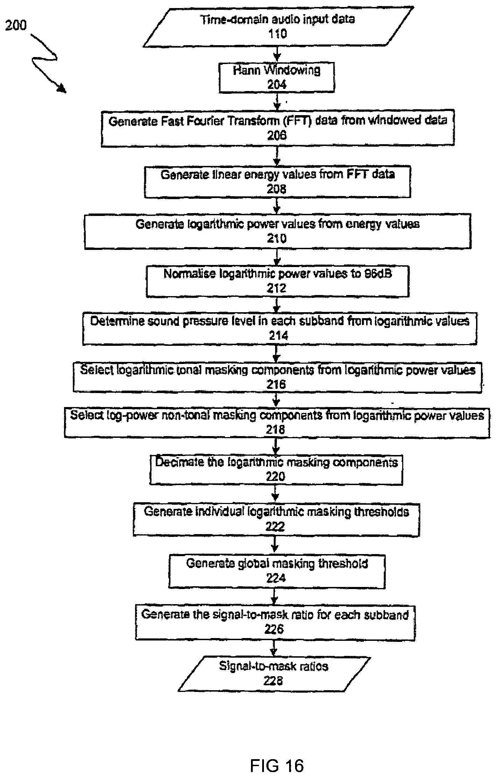

Figure 16    is a flow diagram of process implementing the masking model evaluating a logarithmic function.

## DETAILED DESCRIPTION

A feedforward control system is usually applied if a signal correlated with the unwanted noise that is to be reduced is used to drive the active noise control actuator (a loudspeaker in this case). In contrast, if the system response is measured and looped back, a feedback process is usually applied. Feedforward systems typically exhibit greater effectiveness in suppressing or reducing noise than feedback systems, particularly due to their ability of broadband reduction of noise. This is because feedforward systems enable noise to be prevented by initiating counteractions against evolving noises by evaluating the development of the noise signal. Feedback systems wait for the effects of noise to first become apparent before taking action. Active noise control does not take place until the sensor determines the noise effect. The advantage of feedback systems is that they can also operate effectively even if there is no signal correlated with the noise that can be used for control of the ANC system. For example, this applies to the use of ANC systems for headphones in which the headphones are worn in a space whose noise behavior is not previously known. Combinations of feedforward and feedback systems are also used in practical applications where possible in order to obtain a maximum level of noise reduction. Systems of this kinds are referred to hereafter as hybrid systems.

Practical applications of feedforward control systems for active noise control are commonly adaptive in nature because the noise to reduce is typically subject to timing alterations in its sound level and spectral composition due to changing ambient conditions. In the example regarded here in automobiles, such changes in ambient conditions can be due to different driving speeds (wind noises, revolving tire noises), different load states of the engine, an open window and so on.

It is known that a desired impulse response or transfer function of an unknown system can be adequately approximated using adaptive filters in a recursive method. Adaptive filters are taken to mean digital filters implemented with the aid of algorithms in digital signal processors, that adapt their filter coefficients to the input signal in accordance with the applicable algorithm. The unknown system in this case is assumed to be a linear, distorting system whose transfer function has to be determined. To find this transfer function, an adaptive system is connected in parallel to the unknown system.

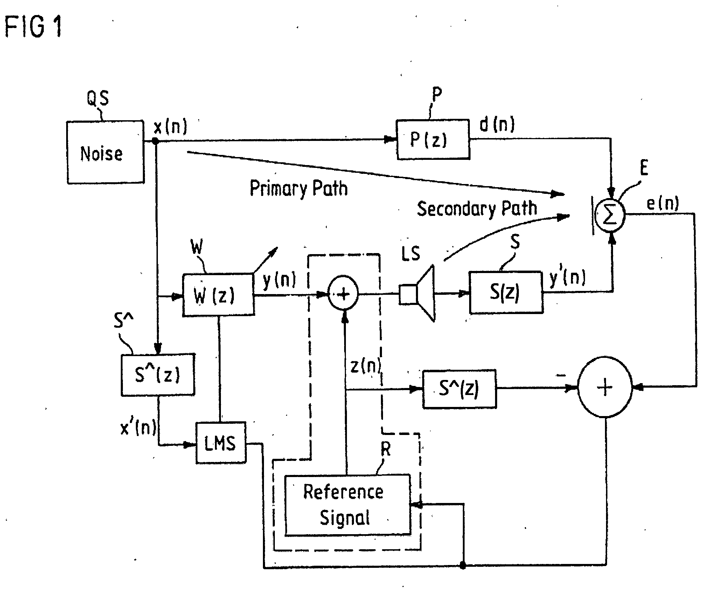

The so-called filtered-x LMS (FxLMS) algorithm is very often used in such cases, or variations of it. The structure of the filtered-x LMS algorithm is shown in Figure 1, which illustrates the block diagram of a typical digital ANC system that employs the filtered-x LMS (FxLMS) algorithm. For the sake of simplification, other components needed to actually realize such a system, such as amplifiers and analog-to-digital or digital-to-analog converters, are not shown here.

The system of Figure 1 comprises a noise source QS, an error microphone E and a primary path P of the sonic transfer from the noise source S to the error microphone E with the transfer function P(z). The system of Figure 1 also includes an adaptive filter W with a transfer function W(z), a loudspeaker LS for generating the noise control soundwaves and a secondary path S describing the sonic transfer from the loudspeaker LS to the error microphone E with the transfer function S(z). Also included in the system of Figure 1 is a filter S^ the transfer function S^(z) of which is estimated from S(z) using the system identification method. The filter S^ is connected downstream of a function block LMS for the Least Mean Square algorithm for adaptive adjustment of the filter coefficients of the filter W. The LMS algorithm is an algorithm for approximation of the solution of the known least mean square problem. The algorithm works recursively - i.e., with each new data set the algorithm is rerun and the solution updated. The LMS algorithm offers a low degree of complexity and associated computing power requirements, numerical stability and low memory requirements.

The filtered-x LMS algorithm also has the advantage that it can be implemented, e.g., in a digital signal processor, with relatively little computing power. Two test signals are required as input parameters for the implementation of the FxLMS algorithm: a reference signal x(n), e.g., directly correlated with an external noise that affects the system, and an error signal e(n) that, e.g., is composed of the superimposition of the signal d(n) induced by the noise x(n) along the primary path P having a transfer function P(z), and a signal y'(n), which is obtained from the actuating signal y(n) through the loudspeaker LS and the secondary path S with the transfer function S(z) at the location of the error sensor. The actuating signal y(n) derives from filtering of the noise signal x(n) with a filter having the transfer function W(z). The name "filtered-x LMS" algorithm is based on the fact that not the noise x(n) directly in combination with the error signal e(n) is used for adaptation of the LMS control, but rather the signal x'(n) filtered with the transfer function S^(z) of filter S^, in order to compensate for the decorrelation, in particular between a broadband error signal x(n) and the error signal e(n), that arises on the primary path P from the loudspeaker LS to the error sensor E, (e.g., a microphone).

IIR (Infinite Impulse Response) or FIR (Finite Impulse Response) filters are used as filters for the transfer functions W(z) and S^(z). FIR filters have a finite impulse response and work in discrete time steps that are usually determined by the sampling frequency of an analog signal. An n-th order FIR filter is defined by the differential equation

$$y(n) = b_0 * x(n) + b_1 * x(n-1) + b_2 * x(n-2) + \ldots + b_N * x(n-N) = \sum_{i=0}^{N} bi * x[n-i]$$

where y(n) is the output value at the time n, and is calculated from the sum of the last N sampled input values x(n-N) to x(n), for which the sum is weighted with filter coefficients $b_i$. The desired transfer function is realized by specification of the filter coefficients $b_i$ (i= 0, 1...N).

Unlike FIR filters, output values that have already been computed are included in the analysis for IIR filters (recursive filters) having an infinite impulse response. Since the computed values can be very small after an infinite time, however, the computation can be interrupted in practice after a finite number of sample values n. The calculation scheme for an IIR filter is

$$y(n) = \sum_{i=0}^{N} b_i * x(n-i) - \sum_{i=0}^{M} a_i * y(n-i)$$

where y(n) is the output value at the time n, and is calculated from the sum of the sampled input values x(n) weighted with the filter coefficients $b_i$ added to the sum of the output values y(n) weighted with the filter coefficients $a_i$. The desired transfer function is again realized by specification of the filter coefficients $a_i$ and $b_i$.

In contrast to FIR filters, IIR filters can be unstable here, but have greater selectivity for the same level of expenditure for their implementation. In practical applications the filter that best satisfies the relevant conditions under consideration of the requirements and associated computation is chosen.

A disadvantage of the simple design of the filtered-x LMS algorithm as shown in Figure 1 is that the quality of the system identification of the secondary path depends on the audio properties - for example, the sound level, bandwidth and spectral distribution of the actual noise signal x(n).

This has the effect in practical terms that the system identification of the secondary path is only carried out in narrowband and that additional noise components at the site of the desired noise cancellation, that are not contained in the noise x(n) dependent on the site of the determination of that noise x(n), are not considered by the filtered-x LMS algorithm. To conform with the causality condition, the site for determining the noise signal x(n) is located such that the resulting sonic propagation time corresponds to at least the period needed to compute the noise control signal for the loudspeaker LS. In practice a reference signal independent of the noise signal x(n) is generally used for system identification. This reference signal is added at a suitable position to the filtered-x LMS algorithm. This is illustrated schematically by the reference signal z(n) in Figure 1, which is added before the loudspeaker LS to the actuating signal for the noise control y(n), and which is used for system identification of the secondary path S. In this case, the signal y'(n) at the error microphone E is obtained from the transfer of the sum of the actuating signal for the noise control y(n) and the reference signal z(n) using the transfer function S(z) of the secondary path S. It is desirable here that the system identification - i.e., the determination of the transfer function S(z) of the secondary path S, be carried out with a signal with the largest possible bandwidth. As described above, a disadvantage of this approach is that this specified reference signal z(n) can be perceived to be intrusive for passengers in an automobile, depending on the prevailing ambient conditions.

The present invention seeks that the required reference signal z(n) for system identification of the secondary path S be produced in such a way that it is inaudible to the vehicle's passengers, taking the applicable noise level and its timing characteristics and spectral properties in the interior of an automobile or for headphones into consideration. To achieve this, physical variables are no longer be exclusively used. Instead, the psychoacoustic properties of the human ear are taken into account.

Psychoacoustics deals with the audio perceptions that arise when a soundwave encounters the human ear. Based on human audible perceptions, frequency group creation in the inner ear, signal processing in the human inner ear and simultaneous and temporary masking effects in the time and frequency domains, a model can be produced to indicate what acoustic signals or what different combinations of acoustic signals are audible and inaudible to a person with normal hearing in the presence of noises. The threshold at which a test tone can be just heard in the presence of a noise (also known as a masker) is referred to as the masked threshold. In contrast, the minimum audible threshold is the term used to describe the threshold at the which a test tone can just be heard in a completely quiet environment. The area between minimum audible threshold and masked threshold is known as the masking area.

The method described below uses psychoacoustic masking effects, which are the basis for the method of active noise control, particularly for generation of the reference signal z(n), which is inaudible to the passengers in the interior of an automobile as intended by the invention, depending on the existing conditions in the passenger area. The psychoacoustic masking model is used to generate the reference signal z(n). In this way, the system identification of the secondary path S is performed adaptively as claimed by the invention and is adjusted in realtime to changes in noise signals. As the noise signals in an automobile, that in accordance with the invention lead to masking i.e., in-audibility of the reference signal z(n), are subject to dynamic changes, both in regard to their spectral composition and to their timing characteristics, a psychoacoustic model considers the dependencies of the masking of the sonic level, of the spectral composition and of the timing.

The basis for the modeling of the psychoacoustic masking are fundamental properties of the human ear, particularly of the inner ear. The inner ear is located in the so-called petruous bone and filled with incompressible lymphatic fluid. The inner ear is shaped like a snail (cochlea) with approximately 2½ turns. The cochlea in turn comprises parallel canals, the upper and lower canals separated by the basilar membrane. The organ of Corti rests on the membrane and contains the sensory cells of the human ear. If the basilar membrane is made to vibrate by soundwaves, nerve impulses are generated - i.e., no nodes or antinodes arise. This results in an effect that is crucial to hearing - the so-called frequency/location transformation on the basilar membrane, with which psychoacoustic masking effects and the refined frequency selectivity of the human ear can be explained.

The human ear groups different soundwaves that occur in limited frequency bands together. These frequency bands are known as critical frequency groups or as critical bandwidth (CB). The basis of the CB is that the human ear compiles sounds in particular frequency bands as a common audible impression in regard to the psychoacoustic hearing impressions arising from the soundwaves. Sonic activities that occur within a frequency group affect each other differently than soundwaves occurring in different frequency groups. Two tones with the same level within the one frequency group, for example, are perceived as being quieter than if they were in different frequency groups.

As a test tone is then audible within a masker when the energies are identical and the masker is in the frequency band whose center frequency is the frequency of the test tone, the sought bandwidth of the frequency groups can be determined. In the case of low frequencies, the frequency groups have a bandwidth of 100 Hz. For frequencies above 500 Hz, the frequency groups have a bandwidth of about 20% of the center frequency of the corresponding frequency group.

If all critical frequency groups are placed side by side throughout the entire audible range, a hearing-oriented non-linear frequency scale is obtained, which is known as tonality and which has the unit "bark". It represents a distorted scaling of the frequency axis so that frequency groups have the same width of exactly 1 bark at every position. The non-linear relationship between frequency and tonality is rooted in the frequency/location transformation on the basilar membrane. The tonality function was defined in tabular and equation form by Zwicker (see Zwicker, E.; Fastl, H. Psychoacoustics - Facts and Models, 2nd edition, Springer-Verlag, Berlin/Heidelberg/New York, 1999) on the basis of masked threshold and loudness examinations. It can be seen that in the audible frequency range from 0 to 16 kHz exactly 24 frequency groups can be placed in series so that the associated tonality range is from 0 to 24 barks.

Moreover, the terms loudness and sound intensity refer to the same quantity of impression and differ only in their units. They consider the frequency-dependent perception of the human ear. The psychoacoustic dimension "loudness" indicates how loud a sound with a specific level, a specific spectral composition and a specific duration is subjectively perceived. The loudness becomes twice as large if a sound is perceived to be twice as loud, which allows different soundwaves to be compared with each other in reference to the perceived loudness. The unit for evaluating and measuring loudness is a sone. One sone is defined as the perceived loudness of a tone having a loudness level of 40 phons - i.e., the perceived loudness of a tone that is perceived to have the same loudness as a sinus tone at a frequency of 1 kHz with a sound pressure level of 40 dB.

In the case of medium-sized and high intensity values, an increase in intensity by 10 phones causes a two-fold increase in loudness. For low sound intensity, a slight rise in intensity causes the perceived loudness to be twice as large. The loudness perceived by humans depends on the sound pressure level, the frequency spectrum and the timing characteristics of the sound, and is also used for modeling masking effects. For example, there are also standardized measurement practices for measuring loudness according to DIN 45631 and ISO 532 B.

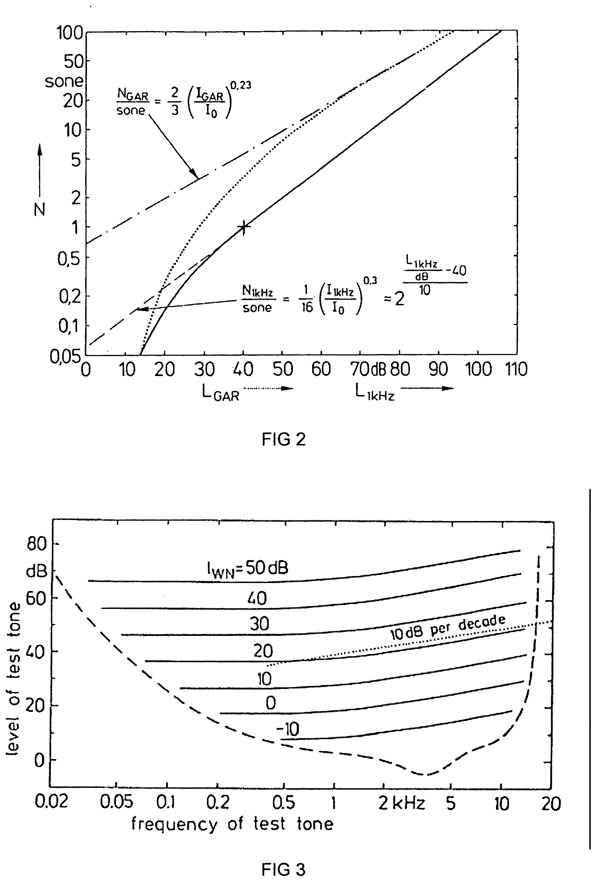

Figure 2 shows an example of the loudness $N_{1kHz}$ of a stationary sinus tone with a frequency of 1 kHz and the loudness $N_{GAR}$ of a stationary uniform excitation noise in relation to the sound level - i.e., for signals for which time effects have no influence on the perceived loudness. Uniform excitation noise (GAR) is defined as a noise that has the same sound intensity in each frequency bandwidth and therefore the same excitation. Figure 2 shows the loudness in sones in logarithmic scale versus sound pressure levels. For low sound pressure levels - i.e., when approaching the minimum audible threshold, the perceived loudness N of the tone falls dramatically. A relationship exists between loudness N and sound pressure level for high sound pressure levels - this relationship is defined by the equations shown in the figure. "I" refers to the sound intensity of the emitted tone in watts per $m^2$, where $I_0$ refers to the reference sound intensity of $10^{-12}$ watts per $m^2$, which corresponds at center frequencies to roughly the minimum audible threshold (see below). It becomes clear from the continued behavior that the loudness N is a useful means of determining masking by complex noise signals, and is thus a necessary requirement for a model of psychoacoustic masking through spectrally complex, time-dependent sound waves.

If the sound pressure level 1 is measured, which is needed to be able to just about perceive a tone as a function of the frequency, the so-called minimum audible threshold is obtained. Acoustic signals whose sound pressure levels are below the minimum audible threshold cannot be perceived by the human ear, even without the simultaneous presence of a noise signal.

The so-called masked threshold is defined as the threshold of perception for a test sound in the presence of a noisy signal. If the test sound is below this psychoacoustic threshold, the test sound is fully masked. This means that all information within the psychoacoustic range of the masking cannot be perceived - i.e., inaudible information can be added to any audio signal, even noise signals. The area between the masked threshold and minimum audible threshold is the so-called masking area, in which inserted signals cannot be perceived by the human ear. This aspect is utilized by the invention to add additional signal components (in the case shown here, the reference signal z(n) for system identification of the secondary path S) to the primary signal (in the case shown here, the noise signal x(n)) or to the total signal comprising the noise signal x(n) and, if applicable, music signals, in such a way that the reference signal z(n) can be detected by the receiver (in the case shown here, the error microphone E) and analyzed for subsequent processing, but is nonetheless inaudible to the human ear.

Numerous investigations have demonstrated that masking effects can be measured for all kinds of human hearing. Unlike many other psychoacoustic impressions, differences between individuals are rare and can be ignored, meaning that a general psychoacoustic model of masking by sound can be produced. The psychoacoustic aspects of the masking are employed in the present invention in order to adapt the reference signal z(n) in realtime to the audio characteristics in such a manner that this acoustically transferred reference signal z(n) is inaudible, regardless of the currently existing noise level, its spectral composition and timing behavior. The noise level can be formed from ambient noise, interference, music or any combination of these.

Here, a distinction is made between two major forms of masking, each of which causes different behavior of the masked thresholds. These are simultaneous masking in the frequency domain and masking in the time domain by timing effects of the masker along the time axis. Moreover, combinations of these two masking types are found in signals such as ambient noise or noise in general.

Simultaneous masking means that a masking sound and useful signal occur at the same time. If the shape, bandwidth, amplitude and/or frequency of the masker changes in such a way that the frequently sinus-shaped test signals are just audible, the masked threshold can be determined for simultaneous masking throughout the entire bandwidth of the audible range - i.e., mainly for frequencies between 20 Hz and 20 kHz. This frequency range generally also represents the available bandwidth of audio equipment used in rearseat entertainment systems in automobiles, and therefore also the useful frequency range for the reference signal z(n) for system identification of the secondary path S.

Figure 3 shows the masking of a sinusoidal test tone by white noise. The sound intensity of a test tone just masked by white noise with the sound intensity $I_{WN}$ is displayed in relation to its frequency where the minimum audible threshold is displayed as a dotted line. The minimum audible threshold of a sinus tone for masking by white noise is obtained as follows: below 500 Hz, the minimum audible threshold of the sinus tone is about 17 dB above the sound intensity of the white noise. Above 500 Hz the minimum audible threshold increases with about 10 dB per decade or about 3 dB per octave, corresponding to doubling the frequency. The frequency dependency of the minimum audible threshold is derived from the different critical bandwidth (CB) of the human ear at different center frequencies.

Since the sound intensity occurring in a frequency group is compiled in the perceived audio impression, a greater overall intensity is obtained in wider frequency groups at high frequencies for white noise whose level is independent of frequency. The loudness of the sound also rises correspondingly (i.e., the perceived loudness) and causes increased masked thresholds. This means that the purely physical dimensions (such as sound pressure levels of a masker, for example) are inadequate for the modeling of the psychoacoustic effects of masking - i.e., for deriving the masked threshold from dimensions, such as sound pressure level and intensity. Instead, psychoacoustic dimensions such as loudness N are used with the present invention. The spectral distribution and the timing characteristics of masking sounds play a major role, which is evident from the following figures.

If the masked threshold is determined for narrowband maskers, such as sinus tones, narrowband noise or critical bandwidth noise, it is shown that the resulting spectral masked threshold is higher than the minimum audible threshold, even in areas in which the masker itself has no spectral components. Critical bandwidth noise is used in this case as narrowband noise, whose level is designated as $L_{CB}$.

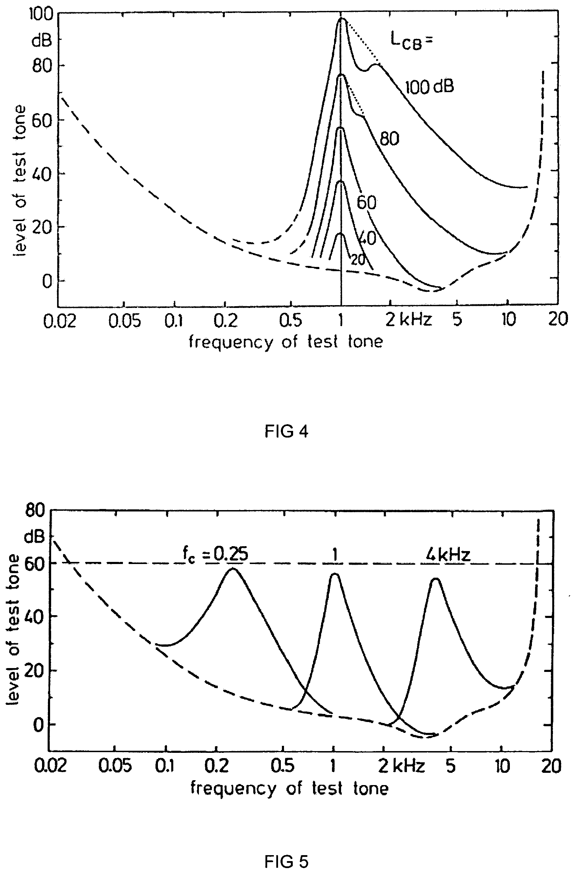

Figure 4 shows the masked thresholds of sinus tones measured as maskers due to critical bandwidth noise with a center frequency $f_c$ of 1 kHz, as well as of different sound pressure levels in relation to the frequency $f_T$ of the test tone with the level $L_T$. The minimum audible threshold is displayed in Figure 3 by a dashed line. It can be seen from Figure 4 that the peak values of the masked thresholds rise by 20 dB if the level of the masker also rises by 20 dB, and that they therefore vary linearly with the level $L_{CB}$ of the masking critical bandwidth noise. The lower edge of the measured masked thresholds - i.e., the masking in the direction of low frequencies lower than the center frequency $f_c$, has a gradient of about -100 dB/octave that is independent of the level $L_{CB}$ of the masked thresholds. This large gradient is only reached on the upper edge of the masked threshold for levels $L_{CB}$ of the masker that are lower than 40 dB. With increases in the level $L_{CB}$ of the masker, the upper edge of the masked threshold becomes flatter and flatter, and the gradient is about - 25 dB/octave for an $L_{CB}$ of 100 dB. This means that the masking in the direction of higher frequencies compared to the center frequency $f_c$ of the masker extends far beyond the frequency range in which the masking sound is present. Hearing responds similarly for center frequencies other than 1 kHz for narrowband, critical bandwidth noise. The gradients of the upper and lower edges of the masked thresholds are practically independent of the center frequency of the masker - as seen in Figure 5.

Figure 5 shows the masked thresholds for maskers from critical bandwidth noise in the narrowband with a level $L_{CB}$ of 60 dB and three different center frequencies of 250 Hz, 1 kHz and 4 kHz. The apparently flatter flow of the gradient for the lower edge for the masker with the center frequency of 250 Hz is due to the minimum audible threshold, which applies at this low frequency even at higher levels. Effects such as those shown are likewise included in the implementation of a psychoacoustic model for the masking. The minimum audible threshold is again displayed in Figure 5 by a dashed line.

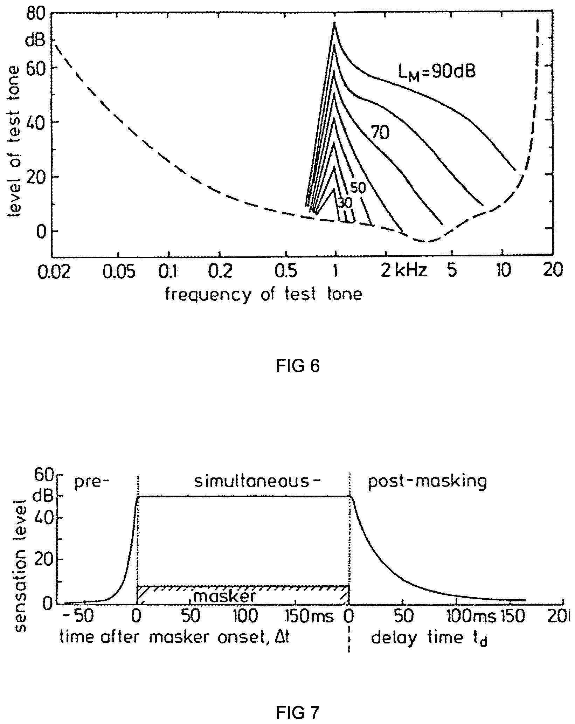

If the sinus-shaped test tone is masked by another sinus tone with a frequency of 1 kHz, masked thresholds such as shown in Figure 6 are obtained in accordance with the frequency of the test tone and the level of the masker $L_M$. As already described earlier, the fanning-out of the upper edge in relation to the level of the masker can be clearly seen, while the lower edge of the masked threshold is practically independent of frequency and level. The upper gradient is measured to be about -100 to -25 dB/octave in relation to the level of the masker, and about -100 dB/octave for the lower gradient. A difference of about 12 dB exists between the level $L_M$ of the masking tone and the maximum values of the masked thresholds $L_r$. This difference is significantly greater than the value obtained with critical bandwidth noise as the masker. This is because the intensities of the two sinus tones of the masker and of the test tone are added together at the same frequency, unlike the use of noise and a sinus tone as the test tone. Consequently, the tone is perceived much earlier - i.e., for low levels for the test tone. Moreover, when emitting two sinus tones at the same time, other effects (such as beats) arise, which likewise lead to increased perception or reduced masking.

Along with the described simultaneous masking, another psychoacoustic effect of masking is the so-called time masking. Two different kinds of time masking are distinguished: pre-masking refers to the situation in which masking effects occur already before the abrupt rise in the level of a masker. Post-masking describes the effect that occurs when the masked threshold does not immediately drop to the minimum audible threshold in the period after the fast fall in the level of a masker. Figure 7 schematically shows both the pre- and post-masking, which are explained in greater detail further below in connection with the masking effect of tone impulses.

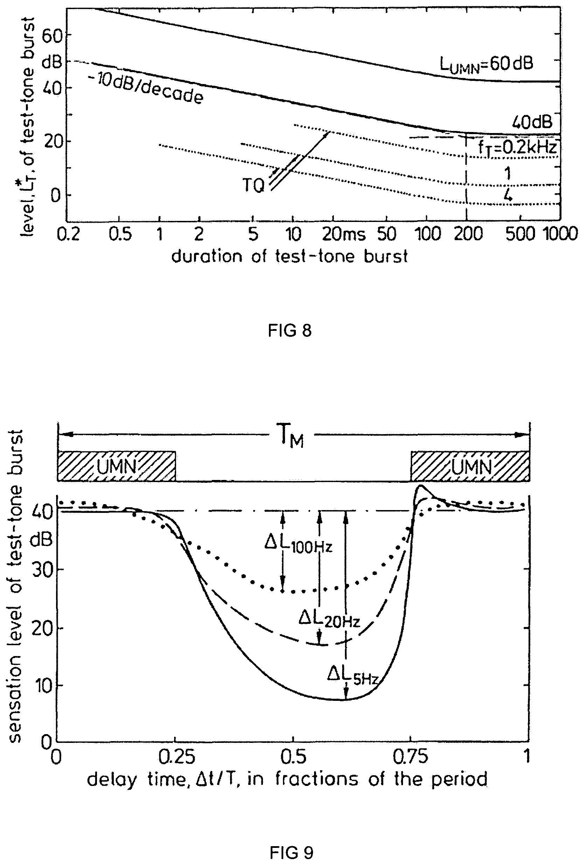

To determine the effects of the time pre- and post-masking, test tone impulses of a short duration must be used to obtain the corresponding time resolution of the masking effects. Here the minimum audible threshold and masked threshold are both dependent on the duration of a test tone. Two different effects are known in this regard. These refer to the dependency of the loudness impression on the duration of a test impulse (see Figure 8) and the relationship between the repetition rate of short tone impulses and loudness impression (see Figure 9).

The sound pressure level of a 20-ms impulse has to be increased by 10 dB in comparison to the sound pressure level of a 200-ms impulse in order to obtain the identical loudness impression. Upward of an impulse duration of 200 ms, the loudness of a tone impulse is independent of its duration. It is known for the human ear that processes with a duration of more than about 200 ms represent stationary processes. Psychoacoustically certifiable effects of the timing properties of sounds exist if the sounds are shorter than about 200 ms.

Figure 8 shows the dependency of the perception of a test tone impulse on its duration. The dotted lines denote the minimum audible thresholds TQ of test tone impulses for the frequencies $f_T$ = 200 Hz, 1 kHz and 4 kHz in relation to their duration, whereby the minimum audible thresholds rise with about 10 dB per decade for durations of the test tone of less than 200 ms. This behavior is independent of the frequency of the test tone, the absolute location of the lines for different frequencies $f_T$ of the test tone reflects the different minimum audible thresholds at these different frequencies.

The continuous lines represent the masked thresholds for masking a test tone by uniform masking noise (UMN) with a level $L_{UMN}$ of 40 dB and 60 dB. Uniform masking noise is defined to be such that it has a constant masked threshold throughout the entire audible range - i.e., for all frequency groups from 0 to 24 barks. In other words, the displayed characteristics of the masked thresholds are independent of the frequency $f_T$ of the test tone. Just like the minimum audible thresholds TQ, the masked thresholds also rise with about 10 dB per decade for durations of the test tone of less than 200 ms.

Figure 9 shows the dependency of the masked threshold on the repetition rate of a test tone impulse with the frequency 3 kHz and a duration of 3 ms. Uniform masking noise is again the masker: it is modulated with a rectangular shape - i.e., it is switched on and off periodically. The examined modulation frequencies of the uniform masking noise are 5 Hz, 20 Hz and 100 Hz. The test tone is emitted with a subsequent frequency identical to the modulation frequency of the uniform masking noise. During the trial, the timing of the test tone impulses is correspondingly varied in order to obtain the time-related masked thresholds of the modulated noise.

Figure 9 shows the shift in time of the test tone impulse along the abscissa standardized to the period duration $T_M$ of the masker. The ordinate shows the level of the test tone impulse at the calculated masked threshold. The dashed line represents the masked threshold of the test tone impulse for an unmodulated masker (i.e., continuously present masker with otherwise identical properties) as reference points.

The flatter gradient of the post-masking in Figure 9 in comparison to the gradient of the pre-masking is clear to see. After activating the rectangular-shaped modulated masker, the masked threshold is exceeded for a short period. This effect is known as an overshoot. The maximum drop $\Delta L$ in the level of the masked threshold for modulated uniform masking noise in the pauses of the masker is reduced as expected in comparison to the masked threshold for stationary uniform masking noise in response to an increase in the modulation frequency of the uniform masking noise - in other words, the masked threshold of the test tone impulse can fall less and less during its lifetime to the minimum value specified by the minimum audible threshold.

Figure 9 also illustrates that a masker already masks the test tone impulse before the masker is switched on at all. This effect is known - as already mentioned earlier - as pre-masking, and is based on the fact that loud tones and noises (i.e., with a high sound pressure level) can be processed more quickly by the hearing sense than quiet tones. The pre-masking effect is considerably less dominant than that of post-masking, and is therefore often omitted in the use of psychoacoustic models to simplify the corresponding algorithms. After disconnecting the masker, the audible threshold does not fall immediately to the minimum audible threshold, but rather reaches it after a period of about 200 ms. The effect can be explained by the slow settling of the transient wave on the basilar membrane of the inner ear.

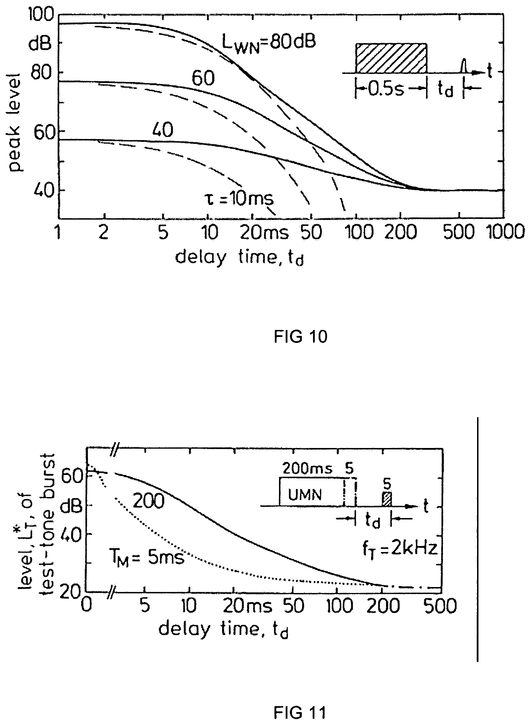

On top of this, the bandwidth of a masker also has direct influence on the duration of the post-masking. The particular components of a masker associated with each individual frequency group cause post-masking as shown in Figures 10 and 11.

Figure 10 shows the level characteristics $L_T$ of the masked threshold of a Gaussian impulse with a duration of 20 $\mu$s as the test tone that is present at a time $t_V$ after the end of a rectangular-shaped masker consisting of white noise with a duration of 500 ms, where the sound pressure level $L_{WR}$ of the white noise takes on the three levels 40 dB, 60 dB and 80 dB. The post-masking of the masker comprising white noise can be measured without spectral effects, since the Gaussian-shaped test tone with a short duration of 20 $\mu$s in relation to the perceivable frequency range of the human ear also demonstrates a broadband spectral distribution similar to that of the white noise. The continuous curves in Figure 10 illustrate the characteristic of the post-processing determined by measurements. They in turn reach the value for the minimum audible threshold of the test tone (about 40 dB for the short test tone used in this case) after about 200 ms, independently of the level $L_{WR}$ of the masker. Figure 10 shows curves by means of dotted lines that correspond to an exponential falling away of the post-masking with a time constant of 10 ms. It can be seen that a simple approximation of this kind can only hold true for large levels of the masker, and that it never reflects the characteristic of the post-masking in the vicinity of the minimum audible threshold.

There is also a relationship between the post-masking and the duration of the masker. The dotted line in Figure 11 shows the masked threshold of a Gaussian-shaped test tone impulse with a duration of 5 ms and a frequency of $f_T$ = 2 kHz as a function of the delay time $t_d$ after the deactivation of a rectangular-shaped modulated masker comprising uniform masking noise with a level $L_{UMN}$ = 60 dB and a duration $T_M$ = 5ms. The continuous line shows the masked threshold for a masker with a duration of $T_M$ = 200 ms with parameters that are otherwise identical for test tone impulse and uniform masking noise.

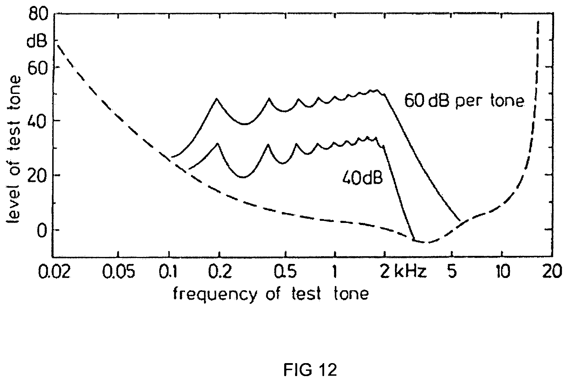

The measured post-masking for the masker with the duration $T_M$ = 200 ms matches the post-masking also found for all maskers with a duration $T_M$ longer than 200 ms but with parameters that are otherwise identical. In the case of maskers of shorter duration, but with parameters that are otherwise identical (like spectral composition and level), the effect of post-masking is reduced, as is clear from the characteristics of the masked threshold for a duration $T_M$ = 5 ms of the masker. To use the psychoacoustic masking effects in algorithms and methods, such as the psychoacoustic masking model, it is also taken into consideration what resulting masking is obtained for grouped, complex or superimposed individual maskers. Simultaneous masking exists if different maskers occur at the same time. Only few real sounds are comparable to a pure sound, such as a sinus tone. In general, the tones emitted by musical instruments, as well as the sound arising from rotating bodies, such as engines in automobiles, have a large number of harmonics. Depending on the composition of the levels of the partial tones, the resulting masked thresholds can vary greatly. Figure 12 shows the simultaneous masking for a complex sound. The masked threshold for the simultaneous masking of a sinus-shaped test tone is represented by the 10 harmonics of a 200-Hz sinus tone in relation to the frequency and level of the excitation. All harmonics have the same sound pressure level, but their phase positions are statistically distributed. Figure 12 shows the resulting masked thresholds for two cases in which all levels of the partial tones are either 40 dB or 60 dB. The fundamental tone and the first four harmonics are each located in separate frequency groups. This means that there is no additive superimposition of the masking parts of these complex sound components for the maximum value of the masked threshold.

However, the overlapping of the upper and lower edges and the depression resulting from the addition of the masking effects - which at its deepest point is still considerably higher than the minimum audible threshold - can be clearly seen. In contrast, most of the upper harmonics are within a critical bandwidth of the human hearing. A strong additive superimposition of the individual masked thresholds takes place in this critical bandwidth. As a consequence of this, the addition of simultaneous maskers cannot be calculated by adding their intensities together, but instead the individual specific loudness values must be added together to define the psychoacoustic model of the masking.

To obtain the excitation distribution from the audio signal spectrum of time-varying signals, the known characteristics of the masked thresholds of sinus tones for masking by narrowband noise are used as the basis of the analysis. A distinction is made here between the core excitation (within a critical bandwidth) and edge excitation (outside a critical bandwidth). An example of this is the psychoacoustic core excitation of a sinus tone or a narrowband noise with a bandwidth smaller than the critical bandwidth matching the physical sound intensity. Otherwise, the signals are correspondingly distributed between the critical bandwidths masked by the audio spectrum. In this way, the distribution of the psychoacoustic excitation is obtained from the physical intensity spectrum of the received time-variable sound. The distribution of the psychoacoustic excitation is referred to as the specific loudness. The resulting overall loudness in the case of complex audio signals is found to be an integral over the specific loudness of all psychoacoustic excitations in the audible range along the tonal scale - i.e., in the range from 0 to 24 barks, and also exhibits corresponding time relations. Based on this overall loudness, the masked threshold is then created on the basis of the known relationship between loudness and masking, whereby the masked threshold drops to the minimum audible threshold in about 200 ms under consideration of time effects after termination of the sound within the relevant critical bandwidth (see also Figure 10, post-masking).

In this way, the psychoacoustic masking model is implemented under consideration of all masking effects discussed above. It can be seen from the preceding figures and explanations what masking effects are caused by sound pressure levels, spectral compositions and timing characteristics of noises, such as background noise, and how these effects can be utilized to manipulate a desired test signal adaptively and in real time for system identification of the secondary path S in such a way that it cannot be perceived by the listener in an environment of the kind described.

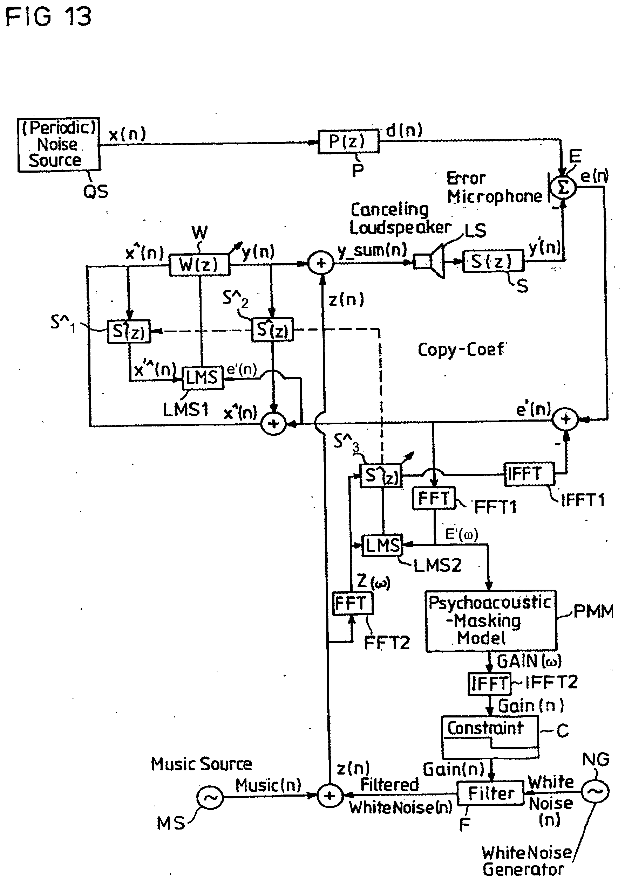

Figs. 13 to 15 below illustrate three examples for application of the psychoacoustic masking model with the present invention, particularly for psychoacoustic system identification of the secondary path S. The signal flow chart in Figure 13 illustrates an initial circuit in accordance with the invention for employment of the psychoacoustic masking model (PMM) for use in an ANC system for noise control in combination with headphones. No suitable reference signal correlated with the expected noise signal is available to this application, and therefore a feedback ANC system as described earlier is used. A feedforward ANC system requires the presence of a reference signal x(n) correlated with the expected noise signal, and that the causality condition is satisfied in such a way that the sensor for reception of this reference signal is always closer to the source of the noise signal to reduce than the error microphone E (see Figure 1). This causality condition cannot be satisfied, particularly for headphones with freedom of movement in an unknown room.

An example of a system according to the invention as shown in Figure 13 comprises a source QS generating a noise signal (e. g. a periodic noise signal), an error microphone E and a primary path P having a transfer function $P(z)$ for sonic transmission from the noise source QS to the error microphone E. The system of Figure 13 also comprises an adaptive filter W having a transfer function $W(z)$, a loudspeaker LS connected upstream of the adaptive filter W for generating the cancellation soundwaves, and a secondary path S having a transfer function $S(z)$ for sonic transmission from the loudspeaker LS to the error microphone E.

The system of Figure 13 also comprises a first filter $S^\wedge_1$ with a transfer function $S^\wedge(z)$, a second filter $S^\wedge_2$ with the transfer function $S^\wedge(z)$ and a third filter $S^\wedge_3$ with the transfer function $S^\wedge(z)$, which were estimated from $S(z)$ using the system identification method as described by S. Mitra, J. S. Kaiser, Handbook For Digital Signal Processing, Wiley and Sons 1993, pages 1085-1092 as well as a first control block $LMS_1$ for adaptation of the filter coefficients of the filter W using the Least Mean Square algorithm, and a second control block $LMS_2$ for adaptation of the filter coefficients of the first, second and third filters $S^\wedge_1$, $S^\wedge_2$ and $S^\wedge_3$ using the Least Mean Square algorithm. The identical transfer functions $S^\wedge(z)$ of the filters $S^\wedge_1$, and $S^\wedge_2$ are obtained in each case by simply copying the filter coefficients of filter $S^\wedge_3$ determined during the adaptive system identification of the secondary path S carried out in realtime.

The system of Figure 13 also comprises a first unit $FFT_1$ and a second unit $FFT_2$ for Fast Fourier Transformations of signals from the time domain to the frequency domain, as well as a first unit $IFFT_1$ and a second unit $IFFT_2$ for Inverse Fast Fourier Transformations of signals from the frequency domain to the time domain. Further, a Psychoacoustic Masking Model unit PMM, a constraint unit C for to avoid circular convolution products, a filter F and a source of white noise NG, and a music signal source MS.

An error signal $e(n)$ at the error microphone E is composed, on one hand, of a signal $d(n)$ resulting from a noise signal $x(n)$ from the noise source QS transmitted over the primary path P having the transfer function $P(z)$, and, on the other hand, of a signal $y'(n)$, resulting from a canceling signal $y\_sum(n)$ supplied to the loudspeaker LS and then transmitted to the error microphone E over the secondary path S having the transfer function $S(z)$. A reference signal $z(n)$ is obtained by adding a signal $Music(n)$ from a music source MS to a signal $FilteredWhiteNoise(n)$ provided by the white-noise source NG via filter F. The reference signal $z(n)$ is added to an output signal $y(n)$ of the filter W, the sum of both said signals forming the signal $y\_sum(n)$.

The reference signal $z(n)$ is also supplied to the Fast Fourier Transformation unit $FFT_2$ to be transformed into a signal $Z(\omega)$, which after filtering through the adaptive filter $S^\wedge_3$ with the transfer function $S^\wedge(z)$ and subsequent Inverse Fast Fourier Transformation through the unit $IFFT_1$ is subtracted from the error signal $e(n)$ to yield the signal $e'(n)$. The Fast Fourier Transformation unit $FFT_1$ converts the signal $e'(n)$ to a signal $e'(\omega)$, which is supplied together with the signal $Z(w)$ to the unit $LMS_2$ for adaptive control of the filter coefficients of the filters $S^\wedge_1$, $S^\wedge_2$, and $S^\wedge_3$ the filters using the Least Mean Square algorithm. The signal $E'(\omega)$ is also used as an input signal for the Psychoacoustic Masking Model unit PMM, which under consideration of the current masking through the noise at the site of the error microphone (i.e., the site of the headphones) generates a signal $GAIN(\omega)$, which is used to determine the reference signal $z(n)$. To do so, signal $GAIN(\omega)$ is converted by the unit for Inverse Fast Fourier Transformation $IFFT_2$ to a time signal $Gain(n)$ and set by the constraint unit C for avoiding circular convolution products, wherein the coefficients of the filter F is controlled by the signal $Gain(n)$ which corresponds to the new filter coefficient set. The $FilteredWhiteNoise(n)$ signal matches the inaudible reference signal for system identification of the secondary path S (inaudible because the reference signal is set below the audible threshold of the current noise signal).

The reference signal $z(n)$ may also include the useful signal $Music(n)$ which, however, is not essential for the function of the present system. The signal $e'(n)$ is added to the signal $y'(n)$ derived from the signal $y(n)$ through the transfer function $S(z)$ of the filter $S^\wedge_2$ in order to obtain a signal $x^\wedge(n)$. The signal $x^\wedge(n)$ represents the input signal for the adaptive filter W and is also used after processing by filter $S^\wedge_1$ having the transfer function $S(z)$ as signal $x'^\wedge(n)$ supplied as well as a signal $e'(n)$ to the unit $LMS_1$ using the Least Mean Square algorithm for adaptive control of the filter coefficients of the filter W.

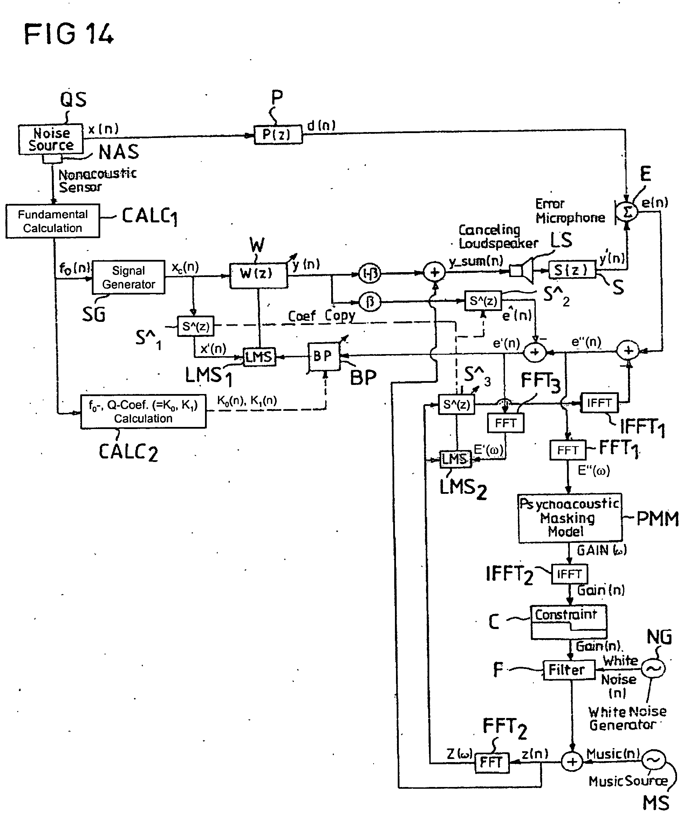

Figure 14 shows an ANC/MST system with noise control in the interior of an automobile using a Psychoacoustic Masking Model unit PMM. In contrast to the headphones application shown in Figure 13, this application has a reference signal $f_0(n)$ correlated with the expected noise signal wherein a feedforward ANC/MST system is employed. The reference signal $f_0(n)$ is generated through a non-acoustic sensor, for example, by a piezoelectric transducer, or electro-acoustic transducer, a Hall element a rpm meter, arranged at the noise source site. Since the circuit shown in Figure 14 is used in an environment whose spatial characteristics (e.g., the interior of an automobile) are known, the causality condition required for a feedforward system, according to which the sensor for the reference signal $f_0(n)$ always has to be closer to the source of the noise signal to be reduced than the error microphone E, can be reliably satisfied by suitable positioning of these components.

The system of Figure 14 includes the system of Figure 13 and, further, a third unit $FFT_3$ for Fast Fourier Transformations of signals from the time domain to the frequency domain, a first calculation circuit $CALC_1$ and a second calculation circuit $CALC_2$. The system of Figure 14 also features in addition to the system of Figure 13 an adaptive bandpass filter BP and, as already mentioned above, a non-acoustic sensor NAS.

In the system of Figure 14, the error signal $e(n)$ at the error microphone E is, like in the system of Figure 13, composed of the signals d(n) and y'(n). The reference signal z(n) is composed of the signal Music(n) from the music source MS and the signal FilterdeWhiteNoise(n). The reference signal z(n) is added to the output signal y(n) of the filter W weighted with 1- $\beta$ yields the signal y_sum(n). The signal z(n) is again fed via the Fast Fourier Transformation unit $FFT_2$ to obtain the signal $Z(\omega)$, which after filtering through the adaptive filter $S\hat{}_3$ and subsequent Inverse Fast Fourier Transformation through the unit $IFFT_1$ is subtracted from the error signal e(n) to yield the signal e"(n) in comparison to Figure 13. The signal e"(n) is converted to the signal E"($\omega$) by the Fast Fourier Transformation unit $FFT_1$. The signal E"($\omega$) is used as an input signal for the Psychoacoustic Masking Model unit PMM, which under consideration of the current masking through the noise at the site of the error microphone generates the signal GAIN($\omega$) which is used to determine the reference signal z(n). To do so, signal GAIN($\omega$) in the frequency domain is transformed by the Inverse Fast Fourier Transformation unit $IFFT_2$ to the signal Gain(n) in the time domain and constraint by the constraint unit C in such a way that the signal WhiteNoise(n) generated from the source NG is converted to the signal FilteredWhiteNoise(n) using the filter F, to which the new filter coefficient set Gain(n) is loaded. The FilteredWhiteNoise(n) signal matches the inaudible reference signal for system identification of the secondary path S (inaudible because the signal is below the audible threshold of the current noise signal). Moreover, the reference signal z(n) may also include the useful signal Music(n), which is not essential for the function of the present system. The signal e$\hat{}$(n), which is output by filter $S\hat{}_2$ supplied with $\beta \cdot$y(n) at its input, is subtracted from the signal e"(n). The signal e'(n) is transformed by the Fast Fourier Transformation unit $FFT_3$ to the signal E'($\omega$), and is used together with Z($\omega$) in the unit $LMS_2$ for adaptive control of the filter coefficients of the filters $S\hat{}_1$, $S\hat{}_2$, and $S\hat{}_3$.

The non-acoustic sensor NAS generates an electrical signal correlated with the acoustic noise signal x(n); said electrical signal is supplied to the calculation circuit CALC1 from which the signal $f_0$(n) is obtained. The signal generator SG then generates an input signal $x_c$(n) for the filter W corresponding to the noise signal wherein $x_c$(n)~x(n). The calculation unit $CALC_2$ determines the filter coefficients K(n) for the adaptive bandpass filter BP. Using the filter $S\hat{}_1$ with the transfer function $S\hat{}$(z), the signal $x_c$(n) is converted to the signal x'(n) and is then used together with the signal e'(n) filtered through the bandpass filter BP for control of the circuit $LMS_1$ for adaptive control of the filter coefficients of the filter W using the Least Mean Square algorithm.

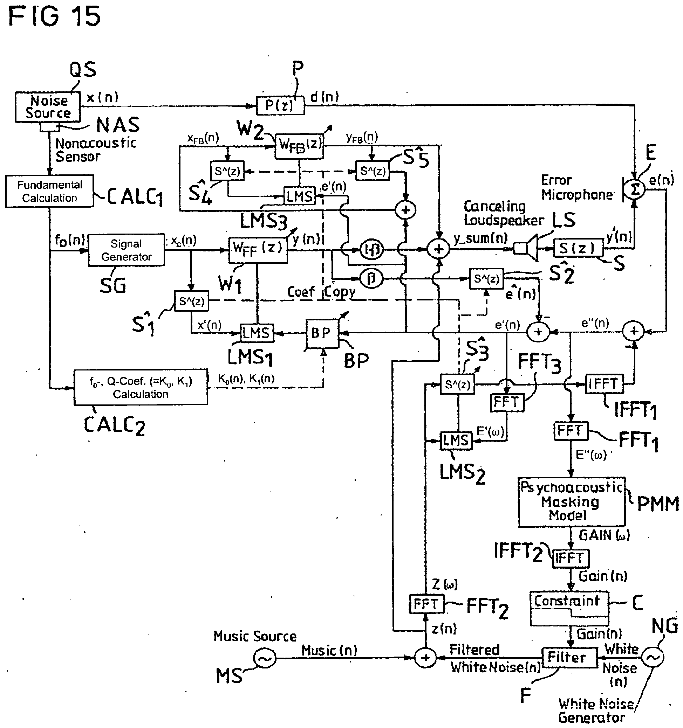

The system of Figure 15 is an ANC/MST system for noise control in the interior of an automobile using a Psychoacoustic Masking Model unit PMM. In addition to the feedforward system shown in Figure 14, the system of Figure 15 also includes a feedback system to produce a hybrid ANC/MST system, which combines the specific advantages of both feedforward and feedback systems. In particular, the feedback path can successfully reduce the noise signals in the interior of an automobile that diffusely and randomly intrude from outside and that do not correlate with the reference signal x(n) determined at a previously known noise source QS.

The filter W with the transfer function W(z) from Figure 14 is replaced in the system of Figure 15 by an equivalent filter $W_1$ with a transfer function $W_{FF}$(z), and which is part of the feedforward system that is equivalent to the system shown of Figure 14. In addition, the system of Figure 15 includes a second filter $W_2$ with a transfer function $W_{FB}$(z) for the feedback path and a third unit $LMS_3$ for adaptive control of the filter coefficients of the filter $W_2$ using the Least Mean Square algorithm. The system of Figure 15 further includes a fourth filter $S\hat{}_4$ with a transfer function $S\hat{}$(z) and a fifth filter $S\hat{}_5$ with a transfer function $S\hat{}$(z), which are estimated using the method of system identification from the transfer function S(z) of the secondary path S.

As in the system of Figure 14, the error signal e(n) at the error microphone E is composed of the signal x(n) generated by the noise source QS and filtered on the primary path P with the transfer function P(z) from the noise x(n) and the signal y'(n), which is the canceling signal y_sum(n) filtered by the transfer functions of the loudspeaker LS and the secondary path S. The reference signal z(n) is derived from the sum of the signal Music(n) from the music source MS and the signal FilteredWhiteNoise(n) from the white noise source NG evaluated with the Psychoacoustic Masking Model by filter F. The reference signal z(n) is added to the output signal y(n) of the filter $W_1$ weighted with 1-$\beta$ as well as to the output signal $y_{FB}$(n) of the filter $W_2$ with the transfer function $W_{FB}$(z) yields the signal y_sum(n).

The signal z(n) is also transformed via the Fast Fourier Transformation unit $FFT_2$ into the signal Z(w), which after filtering through the adaptive filter $S\hat{}_3$ with the transfer function $S\hat{}$(z) and subsequent Inverse Fast Fourier Transformation through the unit $IFFT_1$ is subtracted from the error signal e(n) to yield the signal e"(n) in comparison to the system of Figure 13. The signal e"(n) in the time domain is converted to the signal E"($\omega$) in the frequency domain by the Fast Fourier Transformation unit $FFT_1$. The signal E"($\omega$) is used as an input signal for the Psychoacoustic Masking Model unit PMM, which under consideration of the current masking through the noise at the site of the error microphone E generates the signal GAIN(w), which is used to determine the reference signal z(n) through filter F. To do so, GAIN($\omega$) is converted by the Inverse Fast Fourier Transformation unit $IFFT_2$ to the time signal Gain(n) and constraint by the constraint unit C in such a way that the signal WhiteNoise(n) generated from the source NG is converted to the signal FilteredWhiteNoise(n) using the filter F, to which the new filter coefficient set Gain(n) is loaded.

The FilteredWhiteNoise(n) signal matches the inaudible reference signal for system identification of the secondary path S (inaudible because the signal is below the audible threshold of the current noise signal). Moreover, the reference signal z(n) can also include the useful signal Music(n), which is not essential for the function of the present system. The signal e^(n), generated from β*y(n) with the transfer function S^(z) of the filter S^$_2$, is subtracted from the signal e"(n) to obtain the signal e'(n). This signal e'(n) is converted by the Fast Fourier Transformation unit FFT$_3$ to the signal E'(ω), and is used together with Z(ω) in the unit LMS$_2$ for adaptive control of the filter coefficients of the filters S^$_1$, S^$_2$, S^$_3$, S^$_4$ and S^$_5$ with the Least Mean Square algorithm.

The non-acoustic sensor NAS again generates an electric signal correlated with the noise signal, with which the signal f$_0$(n) is obtained from the calculation unit CALC$_1$. The signal generator SG generates the input signal x(n) for the filter W corresponding to the noise signal. The calculation unit CALC$_2$ determines the filter coefficients K(n) for the adaptive bandpass filter BP. Using the filter S^$_1$ with the transfer function S^(z), the signal x(n) is converted to the signal x'(n) and is then used together with the signal e'(n) filtered through the bandpass filter BP for control of the unit LMS$_1$ for adaptive control of the filter coefficients of the filter W using the Least Mean Square algorithm. The signal e'(n) is added to the signal derived from the signal y$_{FB}$(n) filtered with the transfer function S(z) of the filter S^$_5$ to obtain the signal x$_{FB}$(n). The signal x$_{FB}$(n) represents the input signal for the adaptive filter W$_2$ and is also used after conversion to the signal x'$_{FB}$(n) through the filter S^$_4$ with the transfer function S(z) together with the signal e'(n) for accessing the circuit LMS$_3$ for adaptive control of the filter coefficients of the filter W$_2$ with the transfer function W$_{FB}$(z) using the Least Mean Square algorithm.

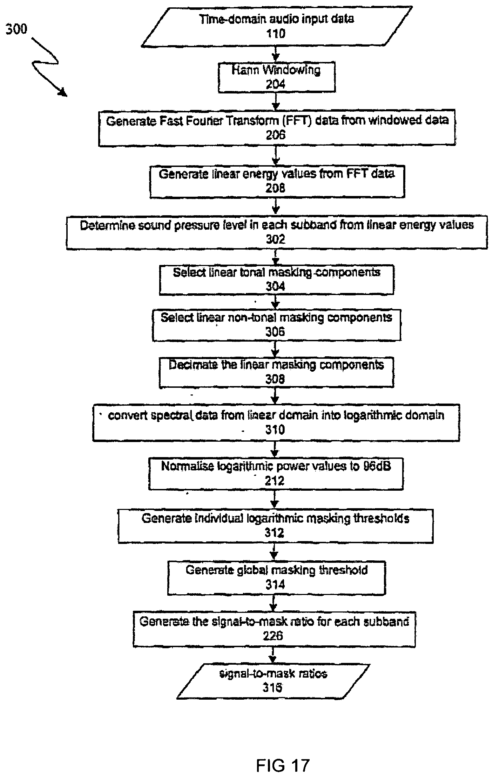

A psychoacoustic mask generation process executed by the Psychoacoustic Masking Model unit PMM of Figures 13-15 provides an implementation of the psychoacoustic model that simulates the masking effects of human hearing. The masking model used may be based on, e.g., the so-called Johnston Model or the MPEG model as described in the ISO MPEG1 standard. The exemplary implementations shown in Figures 16 and 17 use the MPEG model. The psychoacoustic mask modelling processes decribed herein my be implemented in a signal processor or in any other unit knomn running such process.

The psychoacoustic mask modelling processes as shown in Figures 16 and 17 begin with Hann windowing the 512-sample time-domain input audio data frame 110 at step 204. The Hann windowing effectively centers the 512 samples between the previous samples and the subsequent samples, using a Hann window to provide a smooth taper. This reduces ringing edge artefacts that would otherwise be produced at step 206 when the time-domain audio data 110 is converted to the frequency domain using a 1024-point fast Fourier transform (FFT). At step 208, an array of 512 energy values for respective frequency sub-bands is then generated from the symmetric array of 1024 FFT output values, according to:

$$ E(n) \;=\; |X(n)|^2 \;=\; X_R^2(n) + X_I^2(n), $$

where X(n) = X$_R$(n)+iX$_I$(n) is the FFT output of the nth spectral line.

In the following, a value or entity is described as logarithmic or as being in the logarithmic-domain if it has been generated as the result of evaluating a logarithmic function. When a logarithmic value or entity is exponentiated by the reverse operation, it is described as linear or as being in the linear-domain.

In the process shown in Figure 16, the linear energy values E(n) are then converted into logarithmic power spectral density (PSD) values P(n) at step 210, according to P(n) = 10log$_{10}$E(n), and the linear energy values E(n) are not used again. The PSD values are normalised to 96 dB at step 212. Steps 210 and 212 are omitted from the mask generation process 300 of Figure 17.

The next step in both processes is to generate sound pressure level (SPL) values for each sub-band. In the process of Figure 16, an SPL value L$_{sb}$(n) is generated for each sub-band n at step 214, according to:

$$ L_{sn}(n) \;=\; MAX[X_{spl}(n),\; 20 \cdot \log(scf_{max}(n) \cdot 32768) - 10]\, dB $$

and

$$ X_{spl}(n) = 10 * \log_{10}\left( \sum_k 10^{X(k)/10} \right) dB $$

where scf$_{max}$(n) is the maximum of the three scale factors of sub-band n within an MPEG1 L2 audio frame comprising 1152 samples, X(k) is the PSD value of index k, and the summation over k is limited to values of k within sub-band n. The "-10 dB" term corrects for the difference between peak and RMS levels.

In the mask modelling process 300 of Figure 17, L$_{sb}$(n) is calculated at step 302, according to:

$$X_{tpl}(n) = 10 * \log_{10}\left(\sum_k X(k)\right) + 96\,\text{dB}$$

where $X(k)$ is the linear energy value of index k. The "96 dB" term is used in order to normalise $L_{sb}(n)$. It will be apparent that this improves upon the process 200 of Figure 16 by avoiding exponentiation. Moreover, the efficiency of generating the SPL values is significantly improved by approximating the logarithm by a second order Taylor expansion. Specifically, representing the argument of the logarithm as $I_{pt}$, this is first normalised by determining x such that:

$$I_{pt} = (I-x)2^m, \quad 0.5 < 1-x \leq 1$$

Using a second order Taylor expansion,

$$\ln(1-x) \sim -x - x^2/2$$

the logarithm can be approximated as:

$$\log_{10}(Ipt) \approx [m * \ln(2) - (x + x^2/2)] * \log_{10}(e)$$
$$= [m * \ln(2) - (x + x * x * 0.5)] * \log_{10}(e)$$

Thus the logarithm is approximated by four multiplications and two additions, providing a significant improvement in computational efficiency.
The next step is to identify frequency components for masking. As the tonality of a masking component affects the masking threshold, tonal and non-tonal (noise) masking components are determined separately.
First, local maxima are identified. A spectral line $X(k)$ is deemed to be a local maximum if

$$X(k) > X(k-1) \text{ and } X(k) \geq X(k+1)$$

In the process 200 of Figure 16, a local maximum $X(k)$ thus identified is selected as a logarithmic tonal masking component at step 216 if:

$$X(k) - X(k+j) \geq 7\ \text{dB}$$

where j is a searching range that varies with k. If $X(k)$ is found to be a tonal component, then its value is replaced by:

$$X_{tonal}(k) = 10\log_{10}(10^{x(k-1)/10} + 10^{x(k)/10} + 10^{x(k+1)/10})$$

All spectral lines within the examined frequency range are then set to $-\infty$dB.
In the mask modelling process 300 of Figure 17, a local maximum $X(k)$ is selected as a linear tonal masking component at step 304 if:

$$X(k) \cdot 10^{-0.7} \geq X(k+j)$$

If $X(k)$ is found to be a tonal component, then its value is replaced by:

$$X_{tonal}(k) = X(k-1) + X(k) + X(k+1)$$

All spectral lines within the examined frequency range are then set to 0.
The next step in either process is to identify and determine the intensity of non-tonal masking components within the bandwidth of critical sub-bands. For a given frequency, the smallest band of frequencies around that frequency which activate the same part of the basilar membrane of the human ear is referred to as a critical band. The critical bandwidth represents the ear's resolving power for simultaneous tones. The bandwidth of a sub-band varies with the center frequency of the specific critical band. As described in the MPEG-1 standard, 26 critical bands are used for a 48 kHz sampling rate. The non-tonal (noise) components are identified from the spectral lines remaining after the tonal components are removed as described above.

At step 218 of the process 200 of Figure 16, the logarithmic powers of the remaining spectral lines within each critical band are converted to linear energy values, summed and then converted back into a logarithmic power value to provide the SPL of the new non-tonal component $X_{noise}(k)$ corresponding to that critical band. The number k is the index number of the spectral line nearest to the geometric mean of the critical band.

In the mask modelling process 300 of Figure 17, the energy of the remaining spectral lines within each critical band are summed at step 306 to provide the new non-tonal component $X_{noise}(k)$ corresponding to that critical band:

$$X_{noise}(k) = \sum_{k} X(k)$$

for k in sub-band n. Only addition operations are used, and no exponential or logarithmic evaluations are required, providing a significant improvement in efficiency.

The next step is to decimate the tonal and non-tonal masking components. Decimation is a procedure that is used to reduce the number of masking components that are used to generate the global masking threshold.

In the process 200 of Figure 16, logarithmic components $X_{tonal}(k)$ and non-tonal components $X_{noise}(k)$ are selected at step 220 for subsequent use in generating the masking threshold only if:

$$X_{tonal}(k) \ \geq \ LT_q(k) \ \text{or} \ X_{noise}(k) \ \geq \ LT_q(k)$$

respectively, where LTq(k) is the absolute threshold (or threshold in quiet) at the frequency of index k; threshold in quiet values in the logarithmic domain are provided in the MPEG-1 standard.

Decimation is performed on two or more tonal components that are within a distance of less than 0.5 Bark, where the Bark scale is a frequency scale on which the frequency resolution of the ear is approximately constant, as described above (see also E. Zwicker, Subdivision of the Audible Frequency Range into Critical Bands, J. Acoustical Society of America, vol. 33, p. 248, February 1961). The tonal component with the highest power is kept while the smaller component(s) are removed from the list of selected tonal components. For this operation, a sliding window in the critical band domain is used with a width of 0.5 Bark.

In the mask modelling process 300 of Figur 17, linear components are selected at step 308 only if:

$$X_{tonal}(k) \ \geq \ LT_qE(k) \ \text{or} \ X_{noise}(k) \ \geq \ LT_qE(k)$$

where LTqE(k) are taken from a linear-domain absolute threshold table pre-generated from the logarithmic domain absolute threshold table LTq(k) according to:

$$LT_qE(k) \ = \ 10^{\log_{10}[LTq(k)-96]/10}$$

where the "-96" term represents denormalization.

After denormalization, the spectral data in the linear energy domain are converted into the logarithmic power domain at step 310. In contrast to step 206 of the prior art process, the evaluation of logarithms is performed using the efficient second-order approximation method described above. This conversion is followed by normalization to the reference level of 96 dB at step 212.

Having selected and decimated masking components, the next step is to generate individual masking thresholds. Of the original 512 spectral data values, indexed by k, only a subset, indexed by i, is subsequently used to generate the global masking threshold, and the present step determines that subset by subsampling, as described in the ISO MPEG1 standard.

The number of lines n in the subsampled frequency domain depends on the sampling rate. For a sampling rate of 48 kHz, n = 126. Every tonal and non-tonal component is assigned an index i that most closely corresponds to the frequency of the corresponding spectral line in the original (i.e., before sub-sampling) spectral data.

The individual masking thresholds of both tonal and non-tonal components, $LT_{tonal}$ and $LT_{noise}$, are then given by the following expressions:

$$LT_{tonal}[z(j),z(i)] = X_{tonal}[z(j)]+av_{tonal}[z(j)]+vf[z(j),z(i)]dB$$

$$LT_{noise}[z(j),z(i)] = X_{noise}[z(j)]+av_{noise}[z(j)]=vf[z(j),z(i)]dB$$

where i is the index corresponding to a spectral line, at which the masking threshold is generated and j is that of a masking component; z(i) is the Bark scale value of the $i^{th}$ spectral line while z(j) is that of the $j^{th}$ line; and terms of the form X[z(j)] are the SPLs of the (tonal or non-tonal) masking component. The term av, referred to as the masking index, is given by:

$$av_{tonal} = [-1.525-0.275 \cdot z(j)-4.5]dB$$

$$av_{noise} = [-1.525-0.175 \cdot z(j)-0.5]dB$$

vf is a masking function of the masking component and comprises different lower and upper slopes, depending on the distance in Bark scale dz, dz = z(i)-z(i)

In the process 200 of Figure 16, individual masking thresholds are calculated at step 222 using a masking function vf given by:

$$vf = 17 \cdot (dz+1)-0.4 \cdot X[z(j)]-6dB, \text{ for } -3 \le dz < -1 \text{ Bark}$$

$$vf = \{0.4 \cdot X[z(j)]+6\} \cdot dz \text{ dB}, \text{ for } -1 \le dz < 0 \text{ Bark}$$

$$vf = -17 \cdot dz \text{ dB}, \text{ for } 0 \le dz < 1 \text{ Bark}$$

$$vf = -17 \cdot dz+0.15 \cdot X[z(j)]v (dz-1) \text{ dB}, \text{ for } 1 \le dz < 8 \text{ Bark}$$

where X[z(j)] is the SPL of the masking component with index j. No masking threshold is generated if dz < -3 Bark, or dz > 8 Bark.

The evaluation of the masking function vf is the most computationally intensive part of this step. The masking function can be categorized into two types: downward masking (when dz < 0) and upward masking (when dz ≥ 0) wherein downward masking is considerably less significant than upward masking. Consequently, only upward masking is used in the mask generation process 300 of Figure 17. Further analysis shows that the second term in the masking function for 1 ≤ dz < 8 Bark is typically approximately one tenth of the first term, -17·dz. Consequently, the second term may be discarded.

Accordingly, the mask generation process 300 of Figure 17 generates individual masking thresholds at step 312 using a single expression for the masking function vf, as follows:

$$vf = -17 \cdot dz, \text{ } 0 \le dz < 8$$

The masking index av is not modified from that used in the process 200 of Figure 16, because it makes a significant contribution to the individual masking threshold LT and is not computationally demanding. After the individual masking thresholds have been generated, a global masking threshold is generated.

In the process 200 of Figure 16, the global masking threshold LTg(i) at the $i^{th}$ frequency sample is generated at step 224 by summing the powers corresponding to the individual masking thresholds and the threshold in quiet,

according to:

$$LT_g(i) = 10\log_{10}\left[10^{LT_q(i)/10} + \sum_{j=1}^{m}10^{LT_{tonal}[z(j),z(i)]}/10 + \sum_{j=1}^{n}10^{LT_{noise}[z(j),z(i)]}/10\right]$$

where m is the total number of tonal masking components, and n is the total number of non-tonal masking components. The threshold in quiet $LT_q$ is offset by -12dB for bit rates $\geq$ 96kbps per channel. It will be apparent that this step is computationally demanding due to the number of exponentials and logarithms that are evaluated.

In the mask generation process 300 of Figure 17, these evaluations are avoided and smaller terms are not used. The global marking threshold LTg(i) at the $i^{th}$ frequency sample is generated at step 314 by comparing the powers corresponding to the individual masking thresholds and the threshold in quiet, as follows:

$$LT_g(i) = max[LT_q(i) + max_{j=1}^{m}\{LT_{tonal}[z(j),z(i)]\} + max_{j=1}^{n}\{LT_{noise}[z(j),z(i)]\}]$$

The largest tonal masking components $LT_{tonal}$ and of non-tonal masking components $LT_{noise}$ are identified. They are then compared with $LT_{qx}(i)$. The maximum of these three values is selected as the global masking threshold at the $i^{th}$ frequency sample. This reduces computational demands at the of occasional over allocation. As above, the threshold in quiet $LT_q$ is offset by -12dB for bit rates $\geq$ 96kbps per channel.

Finally, signal-to-mask ratio values are calculated at step 226 of both processes. First, the minimum masking level $LT_{min}(n)$ in sub-band n is determined by the following expression:

$$LT_{min}(n) = Min[LTg(i)]dB; \; f \; or \; f(i) \; in \; subband \; n,$$

where f(i) is the $i^{th}$ frequency line within sub-band n. A minimum masking threshold $LT_{min}(n)$ is determined for every sub-band. The signal-to-mask ratio for every sub-band n is then generated by subtracting the minimum masking threshold of that sub-band from the corresponding SPL value:

$$SM_{sb}(n) = L_{sb}(n) - LT_{min}(n)$$

The mask model sends the signal-to-mask ratio data SMRsb (n) for each sub-band n to a quantizer, which uses it to determine how to most effectively allocate the available data bits and quantize the spectral data, as described in the MPEG-1 standard.

The beneficial effect in the examples above is derived from the consideration of the currently available noise level and its spectral attributes in the passenger area of an automobile, for which the test signal for determination of the transfer function of the secondary path is selected in such a way that it is inaudible to the passengers. The existing noise level can comprise unwanted obtrusive signals, such as wind disturbances, wheel-rolling sounds and undesirable noise, such as an acoustically modeled engine noise and, in some cases, simultaneously relayed music signals. Use is made of the effect that inaudible information can be added to any given audio signal if the relevant psychoacoustic requirements are satisfied. The case presented here refers in particular to the psychoacoustic effects of masking.

Further benefits can be derived from the aspect that the method of psychoacoustic masking responds adaptively to the current noise level, and that audio signals (such as music) at the same time are not necessary in order to obtain the desired masking effect.

Although various examples to realize the invention have been disclosed, it will be apparent to those skilled in the art that various changes and modifications can be made which will achieve some of the advantages of the invention without departing from the spirit and scope of the invention. It will be obvious to those reasonably skilled in the art that other components performing the same functions may be suitably substituted. Such modifications to the inventive concept are intended to be covered by the appended claims.

## Claims

1. A system for active control of an unwanted noise signal at a listening site radiated by a noise source (QS) wherein the unwanted noise is transmitted to the listening site via a primary path (P) having a primary path transfer function; said system comprising:

a loudspeaker (LS) for radiating a cancellation signal to attenuate the unwanted noise signal; said cancellation signal is transmitted from the loudspeaker to the listening site via a secondary path (S);

a microphone (E) at the listening site for determining through an error signal the level of achieved reduction;

a first adaptive filter for generating the cancellation signal by filtering a signal representative of the unwanted noise signal with a transfer function adapted to the primary path transfer function using the signal representative of the unwanted noise signal and the error signal from the microphone;

a reference generator for generating a reference signal which is supplied to the loudspeaker together with the cancellation signal from the first adaptive filter and a wanted signal; and

a psychoacoustic masking model unit (PMM) that is configured to model masking in human hearing by the error signal thereby determining at least one of an amplitude and a frequency of the reference signal such that the reference signal is masked for a human listener at the listening site by said wanted signal present at the listening site.

2. The system of claim 1 wherein the psychoacoustic masking model unit models temporal masking.

3. The system of claim 1 or 2 wherein the psychoacoustic masking model unit models spectral masking.

4. The system of one of claims 1 to 3 wherein the psychoacoustic masking model unit is operated in the frequency domain.

5. The system of one of claims 1 to 4 wherein said first adaptive filter adapts according to the Least Mean Square algorithm.

6. The system of claim 5 wherein said first filter adapts according to the filtered X Least Mean Square algorithm.

7. The system of claim 6 further comprising a second adaptive filter having a transfer function modeling the transfer function of the secondary path; said second adaptive filter being connected to the first adaptive filter for filtering the signal representative of the unwanted noise signal used for the adaptation of the first adaptive filter.

8. The system of claim 7 wherein said second adaptive filter adapts according to the Least Mean Square algorithm.

9. The system of one of claims 1 to 8 wherein the signal representative of the unwanted noise signal supplied to the first adaptive filter is derived from the error signal and the signal output by the first adaptive filter and filtered by a third adaptive filter having a transfer function modeling the transfer function of the secondary path.

10. The system of claim 9 wherein the signal representative of the unwanted noise signal supplied to the first adaptive filter is derived further from the reference signal filtered with a fourth adaptive filter having a transfer function modeling the transfer function of the secondary path.

11. The system of claim 10 wherein the fourth filter is operated in the frequency domain; said fourth filter having a time-to-frequency converter connected upstream and a frequency- to-time converter connected downstream.

12. The system of one of claims 1 to 11 wherein the signal representing the unwanted noise signal supplied to the first adaptive filter is derived from a non-acoustic sensor; said non-acoustic sensor providing a sensor signal and being arranged near the unwanted-noise source.

13. The system of claim 12 further comprising a fundamental calculation unit connected downstream of the non-acoustic sensor for calculating a fundamental signal from the sensor signal and a signal generator connected downstream of the fundamental calculation unit for generating the signal representative of the unwanted noise signal from the fundamental signal.

14. The system of claim 13 further comprising a band pass filter (BP) having filter coefficients for filtering the error signal supplied to the first adaptive filter; said filter coefficients are controlled by a coefficient calculation unit connected downstream of the fundamental calculation unit.

**15.** The system of one of claims 1 to 14 wherein the reference signal includes a wanted signal provided by a wanted-signal source.

**16.** The system of one of claims 1 to 15 wherein the signal output by the first adaptive filter is split into two partial signals multiplied with weighting factors; one of said partial signals is supplied to the loudspeaker and the other is supplied to a fifth adaptive filter modeling the secondary path whose output signal is added to the error signal.

**17.** The system of claim 16 wherein the sum of said weights is one.

**18.** The system of one of claims 1 to 17 further comprising a sixth adaptive filter for modeling the primary path; said sixth adaptive filter providing an output signal supplied to the loudspeaker and being supplied with the sum of its output signal and the reference signal.

**19.** A method for active control of an unwanted noise signal at a listening site radiated by a noise source (QS) wherein the unwanted noise is transmitted to the listening site via a primary path (P) having a primary path transfer function; said method comprising the steps of:

radiating a cancellation signal to reduce or cancel the unwanted noise signal; said cancellation signal is transmitted from a loudspeaker (LS) to the listening site via a secondary path (S);
determining through an error signal the level of achieved reduction at the listening site;
first adaptive filtering for generating the cancellation signal by filtering a signal representative of the unwanted noise signal with a transfer function adapted to the primary path transfer function using the signal representative of the unwanted noise signal and the error signal; and
generating a reference signal which is supplied to the loudspeaker together with the cancellation signal from the first adaptive filtering step and a wanted signal; said reference signal has at least one of an amplitude and a frequency such that the reference signal is masked for a human listener at the listening site by said wanted signal present at the listening site,
whereby the at least one of the amplitude and the frequency of the reference signal are determined by a psychoacoustic masking modeling step which models masking in human hearing by the error signal.

**20.** The method of claim 19 wherein the psychoacoustic masking modeling step models temporal masking.

**21.** The method of claim 19 wherein the psychoacoustic masking modeling step models spectral masking.

**22.** The method of one of claims 19 to 21 wherein the psychoacoustic masking modeling step is performed in the frequency domain.

**23.** The method of one of claims 19 to 22 wherein said first adaptive filter step adapts according to the Least Mean Square algorithm.

**24.** The method of claim 23 wherein said first step adapts according to the filtered X Least Mean Square algorithm.

**25.** The method of claim 24 further comprising a second adaptive filtering step using a transfer function modeling the transfer function of the secondary path; said second adaptive filter being connected to the first adaptive filter for filtering the signal representative of the unwanted noise signal used for the adaptation of the first adaptive filter.

**26.** The method of claim 25 wherein said second adaptive filter adapts according to the Least Mean Square algorithm.

**27.** The method of one of claims 19 to 26 wherein the signal representative of the unwanted noise signal used in the first adaptive filtering step is derived from the error signal and the signal output by the first adaptive filtering step and filtered in a third adaptive filtering step having a transfer function modeling the transfer function of the secondary path.

**28.** The method of claim 27 wherein the signal representative of the unwanted noise signal used in the first adaptive filtering step is derived further from the reference signal filtered in a fourth adaptive filtering step having a transfer function modeling the transfer function of the secondary path.

**29.** The method of claim 28 wherein the fourth filtering step is performed in the frequency domain; said fourth filtering step includes a time-to-frequency conversion step in advance to and a frequency-to-time conversion step following said fourth filtering step.

30. The method of one of claims 19 to 29 wherein the signal representing the unwanted noise signal used in the first adaptive filtering step is derived from a non-acoustic sensor; said non-acoustic sensor providing a sensor signal and being arranged near the unwanted-noise source.

31. The method of claim 30 further comprising a fundamental calculation step for calculating a fundamental signal from the sensor signal and a signal generation step for generating the signal representative of the unwanted noise signal from the fundamental signal.

32. The method of claim 31 further comprising a band pass filtering step using filter coefficients for filtering the error signal used in the first adaptive filtering step; said filter coefficients are controlled by a coefficient calculation step using the fundamental signal.

33. The method of one of claims 19 to 32 wherein the reference signal includes a wanted signal provided by a wanted-signal source.

34. The method of one of claims 19 to 33 wherein the signal output by the first adaptive filtering step is split into two partial signals multiplied with weighting factors; one of said partial signals is supplied to the loudspeaker and the other is used by a fifth adaptive filtering step modeling the secondary path whose output signal is added to the error signal.

35. The method of claim 34 wherein the sum of said weights is one.

36. The method of one of claims 19 to 35 further comprising a sixth adaptive filtering step for modeling the primary path; said sixth adaptive filtering step providing an output signal supplied to the loudspeaker and being input with the sum of its output signal and the reference signal.

**Patentansprüche**

1. System zur aktiven Steuerung eines ungewollten Rauschsignals an einer Zuhörerstelle, das durch eine Rauschquelle (QS) ausgestrahlt wird, wobei das ungewollte Rauschen über einen primären Pfad (P) an die Zuhörerstelle übermittelt wird, der eine primäre Pfadübertragungsfunktion aufweist; wobei das System umfasst:

einen Lautsprecher (LS), zum Ausstrahlen eines Auslöschungssignals, um das ungewollte Rauschsignal abzuschwächen; wobei das Auslöschungssignal von dem Lautsprecher an die Zuhörerstelle über einen zweiten Pfad (S) übermittelt wird;
ein Mikrofon (E) an der Zuhörerstelle, um durch ein Fehlersignal das Niveau der erreichten Reduktion zu bestimmen;
einen ersten adaptiven Filter zum Erzeugen des Auslöschungssignals durch Filtern eines Signals, das für das ungewollte Rauschsignal repräsentativ ist, mit einer Übertragungsfunktion, die an die primäre Pfadübertragungsfunktion angepasst ist, unter Verwendung des Signals, welches für das ungewollte Rauschsignal repräsentativ ist und des Fehlersignals von dem Mikrofon;
ein Referenzgenerator zum Erzeugen eines Referenzsignals, welches an den Lautsprecher zusammen mit dem Auslöschungssignal von dem ersten adaptiven Filter und einem gewollten Signal geliefert wird; und
eine psychoakustische Maskierungsmodellierungseinheit (PMM), die konfiguriert ist, um ein Maskieren im menschlichen Hören durch das Fehlersignal zu bestimmen, wodurch zumindest eines von einer Amplitude und einer Frequenz des Referenzsignals bestimmt wird, so dass das Referenzsignal für einen menschlichen Zuhörer bei der Zuhörerstelle durch das gewollte Signal, das an der Zuhörerstelle anwesend ist, maskiert wird.

2. System nach Anspruch 1, wobei die psychoakustische Maskierungsmodellierungseinheit eine temporäre Maskierung modelliert.

3. System nach Anspruch 1 oder 2, wobei die psychoakustische Maskierungsmodellierungseinheit eine spektrale Maskierung modelliert.

**4.** System nach einem der Ansprüche 1 bis 3, wobei die psychoakustische Maskierungsmodellierungseinheit in der Frequenzdomäne betrieben wird.

**5.** System nach einem der Ansprüche 1 bis 4, wobei der erste adaptive Filter gemäß einem Least Mean Square Algorithmus anpasst.

**6.** System nach Anspruch 5, wobei der erste Filter gemäß dem gefilterten X Least Mean Square Algorithmus anpasst.

**7.** System nach Anspruch 6, wobei das System ferner einen zweiten adaptiven Filter umfasst, der eine Übertragungsfunktion aufweist, welche die Übertragungsfunktion des sekundären Pfades modelliert; wobei der zweite adaptive Filter mit dem ersten adaptiven Filter verbunden ist, um das Signal, welches für das ungewollte Geräuschsignal repräsentativ ist, welches für die Anpassung des ersten adaptiven Filters verwendet wird, zu filtern.

**8.** System nach Anspruch 7, wobei der zweite adaptive Filter gemäß dem Least Mean Square Algorithmus anpasst.

**9.** System nach einem der Ansprüche 1 bis 8, wobei das Signal, welches für das ungewollte Geräuschsignal repräsentativ ist, welches an den ersten adaptiven Filter geliefert wird, von dem Fehlersignal und der Signalausgabe durch den ersten adaptiven Filter abgeleitet wird und durch einen dritten adaptiven Filter gefiltert wird, welcher eine Übertragungsfunktion aufweist, welche die Übertragungsfunktion des sekundären Pfades modelliert.

**10.** System nach Anspruch 9, wobei das Signal, welches für das ungewollte Geräuschsignal repräsentativ ist, welches an den ersten adaptiven Filter geliefert wird, ferner von dem Referenzsignal abgeleitet wird, welches mit einem vierten adaptiven Filter gefiltert wird, welcher eine Übertragungsfunktion aufweist, welche die Übertragungsfunktion des sekundären Pfades modelliert.

**11.** System nach Anspruch 10, wobei der vierte Filter in einer Frequenzdomäne betrieben wird; wobei der vierte Filter einen Zeit-zu-Frequenz-Umwandler aufweist, der aufwärts verbunden ist und einen Frequenz-zu-Zeit-Umwandler aufweist, der abwärts verbunden ist.

**12.** System nach einem der Ansprüche 1 bis 11, wobei das Signal, welches das ungewollte Geräuschsignal repräsentiert, welches an den ersten aktiven Filter geliefert wird, von einem nicht-akustischen Sensor abgeleitet wird; wobei der nicht-akustischen Sensor ein Sensorsignal bereitstellt und in der Nähe der ungewollten Rauschquelle angeordnet ist.

**13.** System nach Anspruch 12, wobei das System ferner eine fundamentale Berechnungseinheit umfasst, die abwärts von dem nicht-akustischen Sensor zum Berechnen eines fundamentalen Signals von dem Sensorsignal verbunden ist und einen Signalgenerator umfasst, der abwärts von der fundamentalen Berechnungseinheit verbunden ist, um das Signal, welches für das ungewollte Rauschsignal repräsentativ ist, aus den fundamentalen Signal zu erzeugen.

**14.** System nach Anspruch 13, wobei das System ferner einen Bandpassfilter (BP) umfasst, der Filterkoeffizienten aufweist, um das Fehlersignal, das an den ersten adaptiven Filter geliefert wird, zu filtern; wobei die Filterkoeffizienten durch eine Koeffizientenberechnungseinheit gesteuert werden, die abwärts von der fundamentalen Berechnungseinheit verbunden ist.

**15.** System nach einem der Ansprüche 1 bis 14, wobei das Referenzsignal ein gewolltes Signal beinhaltet, welches durch eine gewollte Signalquelle bereitgestellt wird.

**16.** System nach einem der Ansprüche 1 bis 15, wobei die Signalausgabe durch den ersten adaptiven Filter in zwei Teilsignale aufgeteilt wird, die mit Gewichtungsfaktoren multipliziert werden; wobei eines von den Teilsignalen an den Lautsprecher geliefert wird und das andere an einen fünften adaptiven Filter geliefert wird, welcher den sekundären Pfad modelliert, dessen Ausgabesignal zu dem Fehlersignal hinzugefügt wird.

**17.** System nach Anspruch 16, wobei die Summe der Gewichte eins ist.

**18.** System nach einem der Ansprüche 1 bis 17, wobei das System ferner einen sechsten adaptiven Filter umfasst, um den primären Pfad zu modellieren; wobei der sechste adaptive Filter ein Ausgabesignal bereitstellt, das an den Lautsprecher geliefert wird und mit der Summe von seinem Ausgabesignal und dem Referenzsignal geliefert wird.

**19.** Verfahren zur aktiven Steuerung eines ungewollten Rauschsignals bei einer Zuhörerstelle, das durch eine Rauschquelle (QS) ausgestrahlt wird, wobei das ungewollte Rauschen über einen primären Pfad (P) an die Zuhörerstelle übermittelt wird, der eine primäre Pfadübertragungsfunktion aufweist; wobei das Verfahren die Schritte umfasst:

Ausstrahlen eines Auslöschungssignals, um das ungewollte Rauschsignal zu reduzieren oder auszulöschen; wobei das Auslöschungssignal von einem Lautsprecher (LS) über einen sekundären Pfad (S) an die Zuhörerstelle übermittelt wird;

Bestimmen, durch ein Fehlersignal, des Niveaus der erreichten Reduktion bei der Zuhörerstelle;

erstes adaptives Filtern zum Erzeugen des Auslöschungssignals durch Filtern eines Signals, das für das ungewollte Rauschsignal repräsentativ ist, mit einer Übertragungsfunktion, die an die primäre Pfadübertragungsfunktion angepasst ist, unter Verwendung des Signals, welches für das ungewollte Rauschsignal repräsentativ ist und des Fehlersignals; und

Erzeugen eines Referenzsignals, welches an den Lautsprecher zusammen mit dem Auslöschungssignal von dem ersten adaptiven Filterungsschritt und einem gewollten Signal geliefert wird;

wobei das Referenzsignal zumindest eines von einer Amplitude und eine Frequenz aufweist, so dass das Referenzsignal für einen menschlichen Zuhörer an der Zuhörerstelle durch das gewollte Signal, das an der Zuhörerstelle anwesend ist, maskiert wird,

wobei zumindest eine von der Amplitude und der Frequenz des Referenzsignals durch einen psychoakustischen Maskierungsmodellierungsschritt bestimmt wird, welcher im menschlichen Hören das Fehlersignal maskiert.

20. Verfahren nach Anspruch 19, wobei der psychoakustische Maskierungsmodellierungsschritt ein temporäres Maskieren modelliert.

21. Verfahren nach Anspruch 19, wobei der psychoakustische Maskierungsmodellierungsschritt ein spektrales Maskieren modelliert.

22. Verfahren nach einem der Ansprüche 19 bis 21, wobei der psychoakustische Maskierungsmodellierungsschritt in der Frequenzdomäne durchgeführt wird.

23. Verfahren nach einem der Ansprüche 19 bis 22, wobei der erste adaptive Filterschritt gemäß dem Least Mean Square Algorithmus anpasst.

24. Verfahren nach Anspruch 23, wobei der erste Schritt gemäß dem gefilterten X Least Mean Square Algorithmus anpasst.

25. Verfahren nach Anspruch 24, wobei das Verfahren ferner einen zweiten adaptiven Filterschritt umfasst, unter Verwendung einer Übertragungsfunktion, welche die Übertragungsfunktion des sekundären Pfades modelliert; wobei der zweite adaptive Filter mit dem ersten adaptiven Filter verbunden ist, um das Signal, welches für das ungewollte Rauschsignal repräsentativ ist, das für die Anpassung des ersten aktiven Filters verwendet wird, zu filtern.

26. Verfahren nach Anspruch 25, wobei der zweite adaptive Filter gemäß dem Least Mean Square Algorithmus anpasst.

27. Verfahren nach einem der Ansprüche 19 bis 26, wobei das Signal, welches für das ungewollte Rauschsignal repräsentativ ist, welches in dem ersten adaptiven Filterschritt verwendet wird, von dem Fehlersignal und der Signalausgabe durch den ersten adaptiven Filterschritt abgeleitet wird und in einem dritten adaptiven Filterschritt gefiltert wird, der eine Übertragungsfunktion aufweist, welche die Übertragungsfunktion des sekundären Pfades modelliert.

28. Verfahren nach Anspruch 27, wobei das Signal, welches für das ungewollte Rauschsignal repräsentativ ist, welches in dem ersten adaptiven Filterschritt verwendet wird, ferner von dem Referenzsignal abgeleitet wird, welches in einem vierten adaptiven Filterschritt gefiltert wird, welcher eine Übertragungsfunktion aufweist, welche die Übertragungsfunktion des sekundären Pfades modelliert.

29. Verfahren nach Anspruch 28, wobei der vierte Filterschritt in der Frequenzdomäne durchgeführt wird; wobei der vierte Filterschritt einen Zeit-zu-Frequenz-Umwandlungsschritt beinhaltet, vor dem vierten Filterschritt, und einen Frequenz-zu-Zeit-Umwandlungsschritt beinhaltet, nach dem vierten Filterschritt.

30. Verfahren nach einem der Ansprüche 19 bis 29, wobei das Signal, welches das ungewollte Rauschsignal repräsentiert, welches in dem ersten adaptiven Filterschritt verwendet wird, von einem nicht-akustischen Sensor abgeleitet wird; wobei der nicht-akustischen Sensor ein Sensorsignal bereitstellt und in der Nähe der ungewollten Rauschquelle angeordnet ist.

**31.** Verfahren nach Anspruch 30, wobei das Verfahren ferner einen fundamentalen Berechnungsschritt zum Berechnen eines fundamentalen Signals von dem Sensorsignal umfasst und einen Signalerzeugungsschritt umfasst, zum Erzeugen des Signals, welches für das ungewollte Rauschsignal repräsentativ ist, von dem fundamentalen Signal.

**32.** Verfahren nach Anspruch 31, wobei das Verfahren ferner einen Bandpassfilterschritt umfasst, unter Verwendung von Filterkoeffizienten zum Filtern des Fehlersignals, welches in dem ersten adaptiven Filterschritt verwendet wird; wobei die Filterkoeffizienten durch einen Koeffizientenberechnungsschritt unter Verwendung des fundamentalen Signals gesteuert werden.

**33.** Verfahren nach einem der Ansprüche 19 bis 32, wobei das Referenzsignal ein gewolltes Signal beinhaltet, welches durch eine gewollte Signalquelle bereitgestellt wird.

**34.** Verfahren nach einem der Ansprüche 19 bis 33, wobei die Signalausgabe durch den ersten adaptiven Filterschritt in zwei Teilsignale aufgeteilt wird, die mit Gewichtungsfaktoren multipliziert werden; wobei eines von den Teilsignalen an den Lautsprecher geliefert wird und das andere durch einen fünften adaptiven Filterschritt verwendet wird, der den zweiten Pfad modelliert, dessen Ausgabesignal zu dem Fehlersignal hinzugefügt wird.

**35.** Verfahren nach Anspruch 34, wobei die Summe der Gewichte eins ist.

**36.** Verfahren nach einem Ansprüche 19 bis 35, wobei das Verfahren ferner einen sechsten adaptiven Filterschritt zum Modellieren des primären Pfades umfasst; wobei der sechste adaptive Filterschritt ein Ausgabesignal bereitstellt, das an den Lautsprecher geliefert wird und mit der Summe von seinem Eingabesignal und dem Referenzsignal eingegeben wird.

## Revendications

**1.** Un système de contrôle actif au niveau d'un site d'écoute d'un signal de bruit indésirable rayonné par une source de bruit (QS), le bruit indésirable étant transmis au site d'écoute via un trajet primaire (P) présentant une fonction de transfert de trajet primaire ; ledit système comprenant :

un haut-parleur (LS) destiné à rayonner un signal d'annulation pour atténuer le signal de bruit indésirable ; ledit signal d'annulation étant transmis du haut-parleur au site d'écoute via un trajet secondaire (S) ;
un microphone (E) situé au niveau du site d'écoute pour déterminer par l'intermédiaire d'un signal d'erreur le niveau de réduction obtenu ;
un premier filtre adaptatif destiné à générer le signal d'annulation par filtrage d'un signal représentatif du signal de bruit indésirable par une fonction de transfert adaptée à la fonction de transfert du trajet primaire en utilisant le signal représentatif du signal de bruit indésirable et le signal d'erreur provenant du microphone ;
un générateur de référence destiné à générer un signal de référence qui est appliqué au haut-parleur en même temps que le signal d'annulation provenant du premier filtre adaptatif et qu'un signal souhaité ; et
une unité à modèle de masquage psychoacoustique (PMM) qui est configurée pour modéliser le masquage par l'audition humaine par le signal d'erreur pour déterminer ainsi au moins l'une d'entre une amplitude et une fréquence du signal de référence de telle sorte que le signal de référence soit masqué pour un humain qui écoute au niveau du site d'écoute par ledit signal souhaité présent au niveau du site d'écoute.

**2.** Le système de la revendication 1 dans lequel l'unité à modèle de masquage psychoacoustique modélise un masquage temporel.

**3.** Le système de la revendication 1 ou 2 dans lequel l'unité à modèle de masquage psychoacoustique modélise un masquage spectral.

**4.** Le système de l'une des revendications 1 à 3 dans lequel l'unité à modèle de masquage psychoacoustique opère dans le domaine fréquentiel.

**5.** Le système de l'une des revendications 1 à 4 dans lequel ledit premier filtre adaptatif s'adapte conformément à l'algorithme par moindres carrés moyens.

**6.** Le système de la revendication 5 dans lequel ledit premier filtre s'adapte conformément à l'algorithme par moindres carrés moyens filtrés X.

**7.** Le système de la revendication 6 comprenant en outre un second filtre adaptatif présentant une fonction de transfert modélisant la fonction de transfert du trajet secondaire ; ledit second filtre adaptatif étant relié au premier filtre adaptatif pour filtrer le signal représentatif du signal de bruit indésirable utilisé pour l'adaptation du premier filtre adaptatif.

**8.** Le système de la revendication 7 dans lequel ledit second filtre adaptatif s'adapte conformément à l'algorithme par moindres carrés moyens.

**9.** Le système de l'une des revendications 1 à 8 dans lequel le signal représentatif du signal de bruit indésirable appliqué au premier filtre adaptatif est dérivé du signal d'erreur et du signal produit par le premier filtre adaptatif et filtré par un troisième filtre adaptatif présentant une fonction de transfert modélisant la fonction de transfert du trajet secondaire.

**10.** Le système de la revendication 9 dans lequel le signal représentatif du signal de bruit indésirable appliqué au premier filtre adaptatif est en outre dérivé du signal de référence filtré par un quatrième filtre adaptatif présentant une fonction de transfert modélisant la fonction de transfert du trajet secondaire.

**11.** Le système de la revendication 10 dans lequel le quatrième filtre opère dans le domaine fréquentiel ; ledit quatrième filtre comprenant un convertisseur temps-vers-fréquence relié en amont et un convertisseur fréquence-vers-temps relié en aval.

**12.** Le système de l'une des revendications 1 à 11 dans lequel le signal représentant le signal de bruit indésirable appliqué au premier filtre adaptatif est dérivé d'un capteur non acoustique ; ledit capteur non acoustique produisant un signal de capteur et étant agencé à proximité de la source de bruit indésirable.

**13.** Le système de la revendication 12 comprenant en outre une unité de calcul de fondamentale reliée en aval du capteur non acoustique pour le calcul d'un signal de fondamentale à partir du signal de capteur et un générateur de signal relié en aval de l'unité de calcul de fondamentale pour générer le signal représentatif du signal de bruit indésirable à partir du signal de fondamentale.

**14.** Le système de la revendication 13 comprenant en outre un filtre passe-bande (BP), avec des coefficients de filtre, pour filtrer le signal d'erreur appliqué au premier filtre adaptatif ; lesdits coefficients de filtre étant contrôlés par une unité de calcul de coefficients reliée en aval de l'unité de calcul de fondamentale.

**15.** Le système de l'une des revendications 1 à 14 dans lequel le signal de référence comprend un signal souhaité produit par une source de signal souhaité.

**16.** Le système de l'une des revendications 1 à 15 dans lequel le signal produit par le premier filtre adaptatif est fractionné en deux signaux partiels multipliés par des facteurs de pondération ; l'un desdits signaux partiels est appliqué au haut-parleur et l'autre est appliqué à un cinquième filtre adaptatif, modélisant le trajet secondaire, dont le signal de sortie est ajouté au signal d'erreur.

**17.** Le système de la revendication 16 dans lequel la somme desdites pondérations est égale à l'unité.

**18.** Le système de l'une des revendications 1 à 17 comprenant en outre un sixième filtre adaptatif destiné à modéliser le trajet primaire ; ledit sixième filtre adaptatif produisant un signal de sortie appliqué au haut-parleur et étant alimenté par la somme de son signal de sortie et du signal de référence.

**19.** Un procédé de contrôle actif, au niveau d'un site d'écoute, d'un signal de bruit indésirable rayonné par une source de bruit (QS), le signal indésirable étant transmis au site d'écoute via un trajet primaire (P) présentant une fonction de transfert de trajet primaire ; ledit procédé comprenant les étapes suivantes :

rayonnement d'un signal d'annulation pour réduire ou annuler le signal de bruit indésirable ; ledit signal d'annulation étant transmis d'un haut-parleur (LS) au site d'écoute via un trajet secondaire (S) ;
au site d'écoute, détermination par l'intermédiaire d'un signal d'erreur du niveau de réduction obtenu ;

premier filtrage adaptatif pour génération du signal d'annulation par filtrage d'un signal représentatif du signal de bruit indésirable, par une fonction de transfert adaptée à la fonction de transfert du trajet primaire, en utilisant le signal représentatif du signal de bruit indésirable et le signal d'erreur ; et

génération d'un signal de référence qui est appliqué au haut-parleur en même temps que le signal d'annulation issu de la première étape de filtrage adaptatif et qu'un signal souhaité ; le signal de référence présentant au moins l'une d'une amplitude et d'une fréquence telles que le signal de référence soit masqué pour un humain qui écoute au niveau du site d'écoute par ledit signal souhaité présent au niveau du site d'écoute,

de sorte que la au moins une d'entre l'amplitude et la fréquence du signal de référence soit déterminée par une étape à modélisation de masquage psychoacoustique qui modélise le masquage de l'audition humaine par le signal d'erreur.

20. Le procédé de la revendication 19 dans lequel l'étape à modélisation de masquage psychoacoustique modélise un masquage temporel.

21. Le procédé de la revendication 19 dans lequel l'étape à modélisation de masquage psychoacoustique modélise un masquage spectral.

22. Le procédé de l'une des revendications 19 à 21 dans lequel l'étape à modélisation de masquage psychoacoustique est exécutée dans le domaine fréquentiel.

23. Le procédé de l'une des revendications 19 à 22 dans lequel ladite première étape de filtrage adaptatif s'adapte conformément à l'algorithme par moindres carrés moyens.

24. Le procédé de la revendication 23 dans lequel ladite première étape s'adapte conformément à l'algorithme par moindres carrés moyens filtrés X.

25. Le procédé de la revendication 24 comprenant en outre une seconde étape de filtrage adaptatif utilisant une fonction de transfert modélisant la fonction de transfert du trajet secondaire ; ledit second filtre adaptatif étant relié au premier filtre adaptatif pour filtrer le signal représentatif du signal de bruit indésirable utilisé pour l'adaptation du premier filtre adaptatif.

26. Le procédé de la revendication 25 dans lequel ledit second filtre adaptatif s'adapte conformément à l'algorithme par moindres carrés moyens.

27. Le procédé de l'une des revendications 19 à 26 dans lequel le signal représentatif du signal de bruit indésirable utilisé à la première étape de filtrage adaptatif est dérivé du signal d'erreur et du signal produit à la première étape de filtrage adaptatif et filtré à une troisième étape de filtrage adaptatif présentant une fonction de transfert modélisant la fonction de transfert du trajet secondaire.

28. Le procédé de la revendication 27 dans lequel le signal représentatif du signal de bruit indésirable utilisé à la première étape de filtrage adaptatif est en outre dérivé du signal de référence filtré à une quatrième étape de filtrage adaptatif présentant une fonction de transfert modélisant la fonction de transfert du trajet secondaire.

29. Le procédé de la revendication 28 dans lequel la quatrième étape de filtrage est exécutée dans le domaine fréquentiel ; ladite quatrième étape de filtrage comprend une étape de conversion préalable temps-vers-fréquence et une étape de conversion fréquence-vers-temps suivant ladite quatrième étape de filtrage.

30. Le procédé de l'une des revendications 19 à 29 dans lequel le signal représentant le signal de bruit indésirable utilisé à la première étape de filtrage adaptatif est dérivé d'un capteur non acoustique ; ledit capteur non acoustique produisant un signal de capteur et étant agencé à proximité de la source de bruit indésirable.

31. Le procédé de la revendication 30 comprenant en outre une étape de calcul de fondamentale pour calculer un signal de fondamentale à partir du signal de capteur et une étape de génération de signal pour générer le signal représentatif du signal de bruit indésirable à partir du signal fondamental.

32. Le procédé de la revendication 31 comprenant en outre une étape de filtrage passe-bande utilisant des coefficients de filtre pour le filtrage du signal d'erreur utilisé à la première étape de filtrage adaptatif ; lesdits coefficients de filtre étant contrôlés à une étape de calcul de coefficients en utilisant le signal de fondamentale.

**33.** Le procédé de l'une des revendications 19 à 32 dans lequel le signal de référence comprend un signal souhaité produit par une source de signal souhaité.

**34.** Le procédé de l'une des revendications 19 à 33 dans lequel le signal produit à la première étape de filtrage adaptatif est fractionné en deux signaux partiels multipliés par des facteurs de pondération ; l'un desdits signaux partiels étant appliqué au haut-parleur et l'autre étant utilisé à une cinquième étape de filtrage adaptatif modélisant le trajet secondaire, dont le signal de sortie est ajouté au signal d'erreur.

**35.** Le procédé de la revendication 34 dans lequel la somme desdits poids est égale à l'unité.

**36.** Le procédé de l'une des revendications 19 à 35 comprenant en outre une sixième étape de filtrage adaptatif pour modéliser le trajet primaire ; ladite sixième étape de filtrage adaptatif produisant un signal de sortie appliqué au haut-parleur et recevant comme entrée la somme de son signal de sortie et du signal de référence.

FIG 1

$$\frac{N_{GAR}}{sone} = \frac{2}{3}\left(\frac{I_{GAR}}{I_0}\right)^{0.23}$$

$$\frac{N_{1kHz}}{sone} = \frac{1}{16}\left(\frac{I_{1kHz}}{I_0}\right)^{0.3} \approx 2^{\frac{\frac{L_{1kHz}}{dB}-40}{10}}$$

FIG 2

FIG 3

FIG 4

FIG 5

FIG 6

FIG 7

FIG 8

FIG 9

FIG 10

FIG 11

FIG 12

# FIG 13

# FIG 14

FIG 15

200

```
┌─────────────────────────────────────┐
│     Time-domain audio input data     │
│               110                    │
└─────────────────────────────────────┘
                    │
                    ▼
        ┌───────────────────────┐
        │    Hann Windowing     │
        │          204          │
        └───────────────────────┘
                    │
                    ▼
┌─────────────────────────────────────────────────┐
│ Generate Fast Fourier Transform (FFT) data from  │
│ windowed data                                    │
│                      206                         │
└─────────────────────────────────────────────────┘
                    │
                    ▼
    ┌─────────────────────────────────────┐
    │ Generate linear energy values from  │
    │ FFT data                            │
    │                208                  │
    └─────────────────────────────────────┘
                    │
                    ▼
  ┌───────────────────────────────────────────┐
  │ Generate logarithmic power values from    │
  │ energy values                             │
  │                   210                     │
  └───────────────────────────────────────────┘
                    │
                    ▼
    ┌───────────────────────────────────────┐
    │ Normalise logarithmic power values    │
    │ to 96dB                               │
    │                 212                   │
    └───────────────────────────────────────┘
                    │
                    ▼
 ┌────────────────────────────────────────────────┐
 │ Determine sound pressure level in each subband  │
 │ from logarithmic values                         │
 │                      214                        │
 └────────────────────────────────────────────────┘
                    │
                    ▼
┌──────────────────────────────────────────────────┐
│ Select logarithmic tonal masking components from │
│ logarithmic power values                         │
│                      216                         │
└──────────────────────────────────────────────────┘
                    │
                    ▼
┌────────────────────────────────────────────────────┐
│ Select log-power non-tonal masking components from │
│ logarithmic power values                           │
│                       218                          │
└────────────────────────────────────────────────────┘
                    │
                    ▼
   ┌──────────────────────────────────────────┐
   │ Decimate the logarithmic masking         │
   │ components                                │
   │                  220                      │
   └──────────────────────────────────────────┘
                    │
                    ▼
  ┌────────────────────────────────────────────┐
  │ Generate individual logarithmic masking    │
  │ thresholds                                 │
  │                   222                      │
  └────────────────────────────────────────────┘
                    │
                    ▼
      ┌───────────────────────────────┐
      │ Generate global masking       │
      │ threshold                     │
      │             224               │
      └───────────────────────────────┘
                    │
                    ▼
 ┌────────────────────────────────────────────────┐
 │ Generate the signal-to-mask ratio for each     │
 │ subband                                        │
 │                    226                         │
 └────────────────────────────────────────────────┘
                    │
                    ▼
       ┌───────────────────────────┐
       │   Signal-to-mask ratios   │
       │           228             │
       └───────────────────────────┘
```

FIG 16

300

Time-domain audio input data
110

Hann Windowing
204

Generate Fast Fourier Transform (FFT) data from windowed data
206

Generate linear energy values from FFT data
208

Determine sound pressure level in each subband from linear energy values
302

Select linear tonal masking components
304

Select linear non-tonal masking components
306

Decimate the linear masking components
308

convert spectral data from linear domain into logarithmic domain
310

Normalise logarithmic power values to 96dB
212

Generate individual logarithmic masking thresholds
312

Generate global masking threshold
314

Generate the signal-to-mask ratio for each subband
226

signal-to-mask ratios
316

FIG 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1003154 A

**Non-patent literature cited in the description**

- **WIDROW, B. ; STEARNS, S. D.** Adaptive Signal Processing. Prentice-Hall Inc, 1985
- **ZWICKER, E.** Fastl, H. Psychoacoustics - Facts and Models. Springer-Verlag, 1999
- **S. MITRA ; J. S. KAISER.** Handbook For Digital Signal Processing. Wiley and Sons, 1993, 1085-1092
- **E. ZWICKER.** Subdivision of the Audible Frequency Range into Critical Bands. *J. Acoustical Society of America,* February 1961, vol. 33, 248